# EUROPÄISCHE PATENTSCHRIFT

(11) **EP 2 524 635 B1**
(45) Veröffentlichungstag und Bekanntmachung des Hinweises auf die Patenterteilung: **04.06.2014**
(21) Anmeldenummer: 12168600.0
(22) Anmeldetag: 21.05.2012
(51) Int. Cl.: A47J 31/00

(54) **Vorrichtung und Verfahren zur Zubereitung eines Kaltgetränkes**
Device and method for preparing a cold drink
Dispositif et procédé destinés pour la préparation d'une boisson fraîche

(30) Priorität: 20.05.2011 DE 102011102733
(43) Veröffentlichungstag der Anmeldung: 21.11.2012
(73) Patentinhaber: WMF AG, 73312 Geislingen/Steige (DE)
(72) Erfinder: Frank, Gölterboth, 89134 Blaustein (DE)
(74) Vertreter: Pfenning, Meinig & Partner GbR

(56) Entgegenhaltungen:
- GB-A- 2 386 543
- US-A- 2 878 746

## Beschreibung

Die vorliegende Erfindung bezieht sich auf eine Vorrichtung und auf ein entsprechendes Verfahren zur Zubereitung von kalt extrahiertem Kaffee oder Espresso aus mit Wasser zu durchströmendem Kaffee- oder Espressomehl. Vorzugsweise ist die Vorrichtung elektrisch betrieben; es kann sich somit erfindungsgemäß um einen Kaffeevollautomaten oder eine Espressomaschine zum Herstellen von kaltem Kaffee oder von kaltem Espresso handeln.

Die Zubereitung kalter Kaffeegetränke erfährt eine wachsende Nachfrage. Insbesondere in den asiatischen Ländern gibt es in den Sommermonaten ein reichhaltiges Angebot derartiger Getränke.

Aus dem Stand der Technik sind eine Vielzahl von Kaffeeautomaten zum Herstellen von heißen Kaffeegetränken bekannt. Die Zubereitung kalter Kaffeegetränke erfolgt in der Regel dadurch, dass der heißgebrühte Kaffee in ein Gefäß mit Eiswürfeln abgegeben wird. Damit der mit etwa 90°C gebrühte Kaffee schnell abkühlt, wird eine große Menge Eiswürfel oder Crushed-Eis verwendet. Der heiße Kaffee schmilzt jedoch einen Großteil des Eises, welches dann als Schmelzwasser nicht nur kühlt, sondern auch stark verdünnt, und somit den Geschmack des Kaffees verwässert. Zudem beschreibt die GB 2 386 543 A eine Vorrichtung zum heißen Teeaufbrühen. Bei dieser kann auch kaltes Wasser unter Druck durch den Tee gepresst werden (kalte Teeextraktion). Dabei ist ein Vorbedampfen des Tees vor dem Hindurchpressen von kaltem Wasser unter Druck möglich.

Auch sind aus dem Stand der Technik Lösungen bekannt, um heißgebrühten Kaffee schnell herunter zu kühlen, indem dieser durch einen Durchlaufkühler hindurch geleitet wird. Diese Lösungen sind allerdings sehr energieaufwendig und ineffizient.

Ausgehend vom Stand der Technik ist es somit die Aufgabe, eine - vorzugsweise elektrisch betriebene - Vorrichtung zur Zubereitung von kalt extrahierten Kaffee oder Espresso aus mit Wasser zu durchströmendem Kaffeemehl zur Verfügung zu stellen, die auf einfache, schnelle und energieeffiziente Art und Weise die Herstellung von kaltem Kaffee erlaubt. Die Erfindung soll darüber hinaus ein entsprechendes Herstellungsverfahren zur Verfügung stellen.

Diese Aufgabe wird durch eine Vorrichtung gemäß Anspruch 1 sowie durch ein Verfahren gemäß Anspruch 19 gelöst. Vorteilhafte Ausgestaltungsvarianten lassen sich jeweils den abhängigen Ansprüchen entnehmen. Nachfolgend wird die Erfindung zunächst allgemein, dann anhand von Ausführungsbeispielen beschrieben. Die in den einzelnen Ausführungsbeispielen in Kombination miteinander gezeigten Merkmale müssen dabei im Rahmen des durch die Patentansprüche vorgegebenen Schutzumfangs der vorliegenden Erfindung nicht genau in der gezeigten Merkmalskombination verwirklicht werden, sondern können auch auf andere Art und Weise kombiniert werden. Insbesondere können einzelne der in den Ausführungsbeispielen gezeigten Merkmale auch weggelassen werden.

Lässt man - abgesehen vom Zeitaufwand - heißen Espresso (oder auch Kaffee) langsam kalt werden, so wird dieser durch den in der Luft enthaltenen Sauerstoff oxidiert, was zu einem unerwünschten, bitteren Geschmack führt. Im Vorfeld der vorliegenden Erfindung durchgeführte Versuche haben im Gegensatz dazu ergeben, dass sich auch durch die Extraktion (also das Durchströmen) von gemahlenem Kaffee mit kaltem Wasser ein Kaffeegetränk erzeugen lässt, welches, ggf. in Verbindung mit Milchanteilen wie z.B. kalter Milch oder kaltem Milchschaum (oder auch aromatisierten Sirupanteilen), durchaus ein eigenständiges und schmackhaftes Kaffeeprodukt darstellt.

Der vorliegenden Erfindung liegt somit die Idee des Extrahierens von Kaffee mit nicht erhitztem Wasser, also das Durchströmen von Kaffeemehl mit nicht erhitztem Wasser zugrunde. Erfindungsgemäß wird dieses Vorgehen nachfolgend auch als Kaltextraktion oder alternativ als Kaltbrühen von Kaffee bezeichnet. Wird nachfolgend somit von der Kaltextraktion von Kaffee gesprochen, so ist damit gemeint, dass nicht erhitztes Wasser (also z.B. Wasser, das mit unveränderter Temperatur einem Leitungssystem oder einem Wasservorrat entnommen wird) durch eine mit Kaffeemehl gefüllte Extraktionskammer als Bestandteil einer Durchströmeinheit geleitet wird und den Kaffee somit "kalt" extrahiert. Wird Kaffeemehl mit heißem Wasser durchströmt, so wird nachfolgend explizit von einer Heißextraktion bzw. von einem Heißbrühen gesprochen.

Eine erfindungsgemäße Vorrichtung zur Zubereitung von kalt extrahiertem Kaffee oder von kalt extrahiertem Espresso (nachfolgend Kaltgetränk bezeichnet) aus mit Wasser zu durchströmendem Kaffeemehl (das nachfolgend auch als Stoff bezeichnet wird) weist einen Wasserzulauf zum Anschließen der Vorrichtung an ein externes Wasserleitungssystem und/oder einen Wasserzulauf auf, der ein (in oder an der Vorrichtung angeordnetes) mit Wasser befüllbares Wasserreservoir umfasst. Das Wasserreservoir kann intern, also innerhalb eines Gehäuses der Vorrichtung, oder extern, also außerhalb des Gehäuses der Vorrichtung, ausgebildet sein. Stromabwärts des Wasserzulaufes ist, mit dem Wasserzulauf verbindbar oder verbunden, eine zur Aufnahme des Stoffes (Kaffeemehl) und zum Durchströmen desselben mit Wasser aus dem Wasserzulauf ausgebildete Durchströmeinheit (mit einer Extraktionskammer bzw. einem Extraktionsvolumen) vorhanden.

Zudem ist vorzugsweise ein druckgebendes Element vorgesehen, das sicherstellt, dass die Extraktion des Kaltgetränkes aus dem Stoff mit einem vorbestimmten Druck und/oder Druckverlauf erfolgt, dass also die Durchströmeinheit bzw. deren Extraktionsvolumen mit diesem vorbestimmten Druck durchströmt wird. Dieses Element kann aus mehreren getrennt voneinander angeordneten, über Strömungswege (Leitungen) verbundenen Bauteilen bestehen (im einfachsten Fall einem Anschluss an eine externe Wasserleitung, der über ein Leitungsstück mit einem Ventil, das sich erst ab einem bestimmten Vordruck öffnet und dann den Vordruck auf die Durchströmeinheit gibt, verbunden ist).

Wesentliches erfindungsgemäßes Merkmal ist, dass die Durchströmeinheit (der das Wasser aus dem Wasserzulauf zugeleitet wird) ohne Zwischenschalten eines aktiven (in Sinne von erwärmten) Wassererhitzers mit dem Wasserzulauf so verbunden ist, dass nicht erhitztes Wasser durch die Durchströmeinheit leitbar ist. Diese Verbindung kann über einen Bypassweg, der einen vorhandenen Wassererhitzer umgeht, realisiert sein. Auch kann ein Wassererhitzer vorhanden sein, der so gestaltet ist, dass er (z.B. durch entsprechende Vorwahltasten an der Vorrichtung) abschaltbar ist, so dass das ihn durchströmende Wasser ihn mit unveränderter Temperatur verlässt. Auch kann die Vorrichtung auf einen Wassererhitzer komplett verzichten.

Das Durchströmen der Durchströmeinheit mit Wasser erfolgt somit zwar vorzugsweise unter Druck, jedoch ohne gewollte bzw. deutliche Temperaturveränderung des Wassers; das Wasser wird vor dem Durchströmen nicht erhitzt, das heißt, das Wasser wird (bezüglich seiner Temperatur) so aus dem Wasserleitungssystem oder dem Wasserreservoir entnommen, wie es dort zur Verfügung gestellt wird.

Bevorzugt wird die Wasserzufuhr zur Durchströmeinheit durch die Vorrichtung so gesteuert, dass ein Großteil (bezogen auf die Menge durchströmenden Wassers) des Extraktionsprozesses, z.B. mindestens 95 %, bevorzugt mindestens 98 %, mit nicht erhitztem Wasser durchgeführt wird.

Die erfindungsgemäße Vorrichtung kann als elektrisch betriebene Vorrichtung ausgebildet sein. So kann im einfachsten Fall grundsätzlich ein handelsüblicher Kaffeevollautomat verwendet werden, bei dem der Wassererhitzer (z.B. Durchlauferhitzer) entfernt wird bzw. bei dem statt des Wassererhitzers eine die Temperatur des Wassers nicht wesentlich verändernde Durchflussleitung verwendet wird. Es ist somit möglich, dass die erfindungsgemäße Vorrichtung insgesamt keinerlei Vorrichtung zum Ändern der Temperatur des Wassers (Wassererhitzer) aufweist.

Alternativ dazu ist es jedoch auch denkbar, die Vorrichtung als nicht elektrisch betriebene Vorrichtung auszubilden, die zum Anschluss an ein druckbehaftetes externes Wasserleitungssystem ausgebildet ist, indem als druckgebendes Element einfach der Anschluss an die Wasserleitung und ein in der Anschlussleitung der Vorrichtung sitzendes Ventil verwendet wird.

Ein erfindungsgemäßes druckgebendes Element kann insbesondere eine druckerzeugende, aktive Fördereinheit (z.B. Pumpe) aufweisen oder als solche ausgebildet sein. Auch ein Anschlussleitungsstück an ein externes Wasserleitungssystem mit einer darin angeordneten Absperreinheit (z.B. Ventil), die erst dann, wenn sie geöffnet wird, einen Vordruck an die Durchströmeinheit weiter gibt, ist möglich: Ist also die Vorrichtung zum Anschluss an ein externes, druckbehaftetes Wasserleitungssystem ausgebildet, so kann das Element eine Absperreinheit (Ventil oder Ähnliches) umfassen, die im Strömungspfad des Wassers zwischen dem Anschluss der Vorrichtung an das externe Wasserleitungssystem und der Durchströmeinheit (bzw. deren Extraktionskammer) ausgebildet ist. Soll das Durchströmen der Extraktionskammer mit Wasser gestartet werden, so bewirkt ein Öffnen der Absperreinheit, dass das Durchströmen mit einem vom externen Wasserleitungssystem und den Verhältnissen in der Vorrichtung bestimmten Druck erfolgt.

Wird beispielsweise ein Wasserzulauf mit Wasserreservoir (Vorratsbehälter) innerhalb der Vorrichtung verwendet, so kann es sich bei dem druckgebenden Element um eine zwischen Reservoir und Durchströmeinheit angeordnete druckerzeugende Fördereinheit in Form einer Förderpumpe handeln. Diese Pumpe pumpt das Wasser vom Reservoir durch die Durchströmeinheit und stellt sicher, dass das Durchströmen der Durchströmeinheit mit einem definierten Wasserdruck erfolgt.

Das Durchströmen der Extraktionskammer kann erfindungsgemäß mit einem (durch das druckgebende Element sichergestellten) Druck im Bereich zwischen 0.1 und 50 bar, bevorzugt im Bereich zwischen 0.1 und 15 bar erfolgen.

Die Zeitdauer des Durchströmens der Durchströmeinheit mit nicht erhitztem Wasser (Kaltbrühzeit t_{K}) beträgt vorzugweise zwischen 3 und 60 Sekunden, besonders bevorzugt zwischen 5 und 40 Sekunden.

In einer weiteren vorteilhaften Ausführungsform erfolgt zunächst, für eine vergleichsweise kurze Zeit, ein Durchströmen der Durchströmeinheit mit erhitztem Wasser (Initiieren des Kaltbrühvorgangs mit Heißwasser), bevor dann - mit derselben Stofffüllung in der Durchströmeinheit - der eigentliche Kaltextraktionsvorgang, das heißt das Durchströmen der Durchströmeinheit mit nicht erhitztem Wasser erfolgt. Hierzu weist die erfindungsgemäße Vorrichtung (z.B. mittels eines Bypasses anströmbar) einen Wassererhitzer, insbesondere einen Durchlauferhitzer, auf. Das mit diesem erhitzte Wasser wird somit für eine vorbestimmte Heißbrühzeit t_{B} (vorzugsweise zwischen 1 und 10 Sekunden) durch die Durchströmeinheit geleitet. Zudem, bevorzugt anschließend, erfolgt durch Umgehen, Deaktivieren oder Ausschalten des Wassererhitzers der eigentliche Kaltextraktionsvorgang (bevorzugte Kaltbrühzeiten t_{K}, siehe vorstehend). Statt zeitgesteuert kann der Vorgang auch wassermengengesteuert erfolgen.

Erfindungsgemäß kann die Variante mit Boiler oder Durchlauferhitzer dadurch realisiert werden, dass zwei parallel geschaltete Wasserpfade zwischen Wasserzulauf und Durchströmeinheit vorgesehen sind: Ein erster Wasserpfad, der den Wasserzulauf ohne Zwischenschalten des Wassererhitzers (also ohne aktiv oder passiv gesteuerte Veränderung der Temperatur des aus dem Wasserreservoir oder Wasserleitungssystem entnommenen Wassers) mit der Durchströmeinheit verbindet, und ein zweiter Wasserpfad, der den Wasserzulauf über den Wassererhitzer mit der Durchströmeinheit verbindet. Mittels entsprechend (z.B. mithilfe einer Steuereinheit, siehe nachfolgend) steuerbarer Ventile in diesen beiden Pfaden können die Pfade so gesteuert sein, dass zu einem bestimmten Zeitpunkt jeweils nur einer der Pfade zum Wasserdurchlauf geöffnet sein kann.

Weist die Vorrichtung einen abschaltbaren oder deaktivierbaren Wassererhitzer auf, so reicht grundsätzlich ein Pfad zum Zuführen des Wassers zur Durchströmeinheit durch diesen Wassererhitzer aus: Der Wassererhitzer kann dann vor jeglicher Wasserzufuhr abgeschaltet werden. Ebenso ist es jedoch möglich, den Wassererhitzer zunächst für eine bestimmte Zeitdauer bzw. durchfließende Wassermenge (zum Initiieren des in der Durchströmeinheit befindlichen Stoffes) auszuschalten, bevor er anschließend abgeschaltet wird und eine weitere Wassermenge, ohne dass diese erhitzt wird, durch ihn hindurch geleitet wird. Die erhitzte, zum Initiieren des Stoffes verwendete Wassermenge zu Beginn ist dabei kleiner als die den Stoff in kaltem Zustand durchströmende Wassermenge.

Es kann somit eine Steuereinheit vorgesehen sein, mit der (z.B. durch Steuern der Ventile innerhalb der beiden Pfade) die zum Initiieren verwendete Heißbrühzeit t_{B} und die Kaltbrühzeit t_{K} gesteuert und geregelt werden. Ebenso kann diese Steuereinheit zum Steuern der während dieser Zeiten jeweils durch die Durchströmeinheit durchgeleiteten Mengen an heißem und kaltem Wasser eingesetzt werden. Die Steuereinheit kann dabei in Form einer rechnerbasierten (einen Mikroprozessor und einen Speicher mit entsprechenden Steuerprogrammen umfassende) Steuereinheit realisiert sein. Ebenso ist jedoch denkbar, die Steuereinheit (z.B. mithilfe entsprechender mechanischer Vorrichtungen wie Schalter, ...) als mechanische, manuell schaltbare Einheit auszubilden.

Das Verhältnis zwischen der zum Initiieren der Kaltbrühung verwendeten Heißwassermenge und der während der Kaltbrühzeit verwendeten Menge an nicht erhitztem Wasser beträgt vorzugsweise zwischen 1:200 und 1:1, besonders bevorzugt zwischen 1:100 und 1:2.

Erfindungsgemäß kann zwischen einem Initiieren mit Heißwasser und einer anschließenden Kaltbrühung (also zwischen t_{B} und t_{K}) eine Durchströmpause vorgesehen sein, in der die Durchströmeinheit nicht mit Flüssigkeit durchströmt wird. Die entsprechende Pausenzeit t_{P} kann zwischen 0.1 und 600 Sekunden, bevorzugt zwischen 0.5 und 300 Sekunden liegen.

Die Menge des während der Heißbrühzeit t_{B} durch die Durchströmeinheit durchgeführten Heißwassers kann zwischen 1 und 50 ml, bevorzugt zwischen 3 und 20 ml betragen.

Vorteile einer Initiierung mit Heißwasser oder Dampf sind das schnellere Öffnen/Aufschließen der Zellen im Kaffee, die verstärkte Quellwirkung der Kaffeepartikel, verbunden mit einer verstärkten Eigenfiltration. Insgesamt wird durch die Initiierung der Übergang/das Ausschwemmen von Kaffeebestandteilen und Stoffen (Aromen, Fetten etc.) aus dem Kaffeemehl in das Getränk verstärkt.

In einer weiteren vorteilhaften Variante erlaubt die erfindungsgemäße Vorrichtung wahlweise auch das Zubereiten eines Heißgetränkes: In diesem Fall wird, z.B. über einen Schalter am Gehäuse der Vorrichtung oder auch über eine entsprechende Steuereinheit programmgesteuert, ein Großteil oder das gesamte für die Zubereitung des Getränks verwendete Wasser über den vorbeschriebenen Wassererhitzerpfad geleitet.

In diesem Fall können, abhängig davon, ob gerade ein Kaltgetränk oder ein Heißgetränk gewünscht wird, die für die Eigenschaften des Getränks maßgeblichen physikalischen Parameter (nachfolgend:
Durchströmparameter) mittels der Vorrichtung variiert werden. Dies kann bevorzugt mittels einer mikroprozessorgesteuerten Steuereinheit, in der entsprechende Programme zum Zubereiten verschiedener Kalt- und Heißgetränke abgelegt sind, realisiert sein.

So kann beispielsweise (als Durchströmparameter) der Mahlgrad, also die Korngrößenverteilung, in Abhängigkeit davon verändert werden, ob ein Kalt- oder ein Heißgetränk hergestellt werden soll: So ist beispielsweise beim Herstellen eines Kaffee-Kaltgetränkes ein feineres Kaffeemehl (0 bis 30 % geringere mittlere Korngröße als beim Herstellen eines Kaffee-Heißgetränkes) vorteilhaft, da die spezifische Oberfläche größer ist und somit der Stofftransport in das Getränk verstärkt möglich ist.

Entsprechend kann die erfindungsgemäße Vorrichtung ein Mahlwerk mit, z.B. mittels der vorbeschriebenen Steuereinheit, verstellbarer Mahlcharakteristik (Mahlscheibenabstand) aufweisen und so ausgebildet sein, dass - nach Wahl des jeweiligen Getränkes durch den Benutzer - in Abhängigkeit von der Getränkewahl unterschiedliche Mahlgrade einstellbar sind. Auch kann die Vorrichtung mehrere Mahlwerke aufweisen, bei denen unterschiedliche Mahlgrade voreingestellt sind. Je nach Getränkewahl (z.B. kalt oder heiß) können dann mittels der Steuereinheit unterschiedliche Mahlwerke angesteuert werden. Selbstverständlich kann die Vorrichtung auch einen Dosierbehälter aufweisen, aus dem der Durchströmeinheit vorgemahlener Kaffee maschinell oder mittels Handeinwurf zugeführt werden kann. Der mit dem entsprechend des Getränks festgelegten Mahlgrad gemahlene Kaffee wird dann über einen Transportabschnitt (z.B. Rutsche) vom Mahlwerk in die Durchströmeinheit transportiert.

Weitere in Abhängigkeit von der Brühtemperatur des verwendeten Wassers (bzw. vom Zubereiten eines Kalt- oder Heißgetränkes) variierbare Durchströmparameter können sein:
- die (Kaffee-)Mehlmenge, die der Extraktionskammer zum Durchströmen zugeführt wird (Variation um bis zu ± 50 %),
- die Zeitdauer des Durchströmens (unterschiedliche Kalt- und Heißbrühzeiten, z.B. Variation um bis zu ± 50 %) und/oder
- der Druck (unterschiedlicher Kaltbrühdruck und Heißbrühdruck in der Extraktionskammer, z.B. Variation um bis zu ± 50 %).

Alternativ zum (oder auch in Kombination mit dem) Initiieren mit Heißwasser kann erfindungsgemäß auch ein Initiieren oder Ergänzen einer Kaltextraktion mit Dampf erfolgen (Durchströmen derselben Stoffmenge mit Dampf und nicht erhitztem Wasser). Erfindungsgemäß weist die Vorrichtung in diesem Fall einen Dampferzeuger (z.B. Wärmetauscher oder Boiler) auf, mit dem das Wasser aus dem Wasserzulauf erhitzt wird, in Wasserdampf gewandelt wird und anschließend der Durchströmeinheit zum Durchströmen des Stoffes in der Extraktionskammer zugeleitet wird. Auch für den Dampferzeuger kann ein entsprechender Bypass der für das Kaltextrahieren vorgesehenen Leitungswege realisiert sein. Erfindungsgemäß erfolgt somit sowohl ein Durchströmen der Extraktionskammer für eine vorbestimmte Dampfzeit t_{D} mit Dampf, als auch für eine vorbestimmte Kaltbrühzeit t_{K} (siehe vorstehend) mit nicht erhitztem Wasser aus dem Wasserzulauf unter Umgehen oder Deaktivieren des Dampferzeugers. Vorzugsweise erfolgt zunächst ein Bedampfen der Durchströmeinheit, bevor die eigentliche Kaltextraktion beginnt. t_{D} liegt vorzugsweise zwischen 0.1 und 300 Sekunden, besonders bevorzugt zwischen 0.5 und 90 Sekunden.

Auch hier können zwei parallel geschaltete Wasserpfade zwischen Wasserzulauf und Durchströmeinheit vorgesehen sein: Ein erster Wasserpfad, der den Wasserzulauf ohne Zwischenschalten eines Wassererhitzers (also ohne wesentliche Temperaturveränderung am verwendeten Wasser) mit der Durchströmeinheit verbindet und ein weiterer Wasserpfad, der den Wasserzulauf über den Dampferzeuger mit der Durchströmeinheit verbindet.

Ist somit sowohl ein Dampferzeuger, als auch ein Wassererhitzer vorgesehen, so existieren drei parallel geschaltete Wasserpfade. Wie bereits beschrieben, können alle Pfade (z.B. basierend auf entsprechenden Ventilen und gesteuert durch die bereits erwähnte Steuereinheit) so geschaltet werden, dass Pfade zum Durchströmen von Wasser (bzw. Dampf) geöffnet und geschlossen werden können.

Das Einstellen bzw. Regeln der Dampfzeit t_{D} und/oder der in dieser Zeit durch die Durchströmeinheit hindurch geleiteten Menge an Dampf kann (ebenso wie für t_{B} und t_{K} bereits beschrieben) auf Basis einer Regelung entsprechender Ventile durch eine Steuereinheit erfolgen. Diese kann auch entsprechende Pausen zwischen einem Durchströmen der Extraktionskammer mit Dampf und mit dem (zuvor oder anschließend durchgeführten) Durchströmen mit nicht erhitztem Wasser einstellen. Auch diese Pausenlänge beträgt vorzugsweise zwischen 0.5 und 300 Sekunden.

Elektrische wie nicht elektrisch betriebene Vorrichtungen gemäß der Erfindung können sich insbesondere auch dadurch auszeichnen, dass weder aktive Kühleinheiten zum Kühlen des Wassers oder des zubereiteten, die Extraktionskammer verlassenden Getränks (wie beispielsweise Kompressoren oder Peltierelemente) vorgesehen sind, noch passive Kühleinheiten wie beispielsweise Wärmetauscher oder Absorber. Erfindungsgemäß ist somit ein besonders schnelles und energieeffizientes Erzeugen eines Kaltgetränkes möglich. Selbstverständlich können aber auch passive und/oder aktive Kühleinheiten vorhanden sein.

Ist die erfindungsgemäße Vorrichtung (insbesondere als elektrisch betriebener Kaffeevollautomat) speziell zum Zubereiten von kaltem Kaffee oder von kaltem Espresso ausgebildet, so kann neben einem Auslassabschnitt zum Abführen des die Extraktionskammer verlassenden kalten Kaffees bzw. Espressos in ein externes Gefäß (Tasse) des weiteren eine Milchschaumerzeugungseinheit, mit der kalte Milch und kalter Milchschaum erzeugt werden kann, vorgesehen sein. Die kalte Milch und der kalte Milchschaum können dann zusammen mit dem kalten Kaffee bzw. Espresso über den Auslassabschnitt abgeführt werden oder auch getrennt vom Auslassabschnitt (das heißt über einen separaten Auslass, der ebenfalls in die Tasse führt) abgeleitet werden.

Vorzugsweise ist eine solche Milch- und Milchschaumerzeugungseinheit wie folgt aufgebaut: Eine Milchleitung ist zum Entnehmen der Milch aus z.B. einem Tetrapak, zum Transportieren der Milch und zum Zuleiten der Milch zum externen Gefäß (Tasse) vorgesehen. Die Milchleitung enthält eine Fördereinrichtung. In die Milchleitung mündet darüber hinaus (z.B. nach der Fördereinrichtung) eine Leitung zum Zuführen von Luft. Diese Leitung enthält eine Luftpumpe, über die Luft angesaugt und in die Milchleitung gepumpt wird. Stromabwärts der Mündung der Luftleitung in die Milchleitung (die Mündung kann als einfaches T-Leitungsstück ausgebildet sein) ist ein Mischabschnitt vorgesehen, der dem Vermischen der Luft und der Milch dient. Dieser weist bevorzugt mindestens eine Engstelle in der Milchleitung, gefolgt von einem langgestreckten Leitungsabschnitt der Milchleitung, der als Entspannungsstrecke dient, auf. Die Engstelle dient dazu, Milch und Luft gut zu vermischen. Die anschließende Beruhigungsstrecke (die z.B. zwischen 30 und 50 cm lang sein kann) dient dazu, dass sich die Luft gleichmäßig in der Milch verteilt.

Erfindungsgemäß kann auch ein Hinzusetzen von Aromakomponenten zum Kaltgetränk realisiert werden. Hierzu ist ein Zusatzabschnitt vorgesehen, der mindestens einen Vorratsbehälter für die Aromakomponente(n) sowie mindestens einen aus diesem Vorratsbehälter führenden, diese Aromakomponente(n) dem Wasser (oder dem bereits hergestellten Kaltgetränk) zusetzenden Leitungsabschnitt umfasst. In diesem Leitungsabschnitt kann zwischen dem mindestens einen Vorratsbehälter und der Einmündung des Leitungsabschnittes stromaufwärts oder stromabwärts der Durchströmeinheit mindestens eine Förderpumpe für die Aromakomponente (z.B. verschiedene Siruparten) vorgesehen sein. Unter Weglassen der Förderpumpe(n) ist auch eine Schwerkraftförderung möglich. Auch können die Aromakomponenten direkt in das Trinkgefäß gegeben werden (z.B. Einleitung über eine separate Zuleitung im Auslasskopf der Vorrichtung).

In einer vorteilhaften Ausführungsform ist die Durchströmeinheit (mit der Extraktionskammer) zur Aufnahme des zu durchströmenden Stoffes und zum Verpressen desselben mit einem vorbestimmten Pressdruck ausgebildet. Die Durchströmeinheit kann hierzu eine verschließbare Extraktionskammer bzw. Brühkammer (z.B. Brühzylinder) aufweisen. Innerhalb dieser Extraktions- bzw. Brühkammer ist dann ein verschiebbares Presselement (insbesondere ein Brühkolben) angeordnet, der nach Zufuhr des Stoffes in die Brühkammer und Verschließen derselben mit einem vorbestimmten Pressdruck auf den Stoff einwirken kann.

Alternativ dazu kann die Durchströmeinheit jedoch auch zur Aufnahme eines auswechselbaren Einsatzes, der den zu durchströmenden Stoff in bereits vorportionierter Form enthält (z.B. Kaffeepad oder Kaffeekapsel) ausgebildet sein. Beispielsweise können die Wände der Extraktionskammer als zwei aufklappbare, halbschalenförmige Hälften realisiert sein, zwischen die bzw. in deren Innenvolumen der auswechselbare Einsatz eingelegt werden kann. Sofern notwendig, kann dann auch eine Einheit zum Perforieren des Einsatzes bzw. der Kapsel oder des Pads vorgesehen sein. Entsprechende Aufbauten sind dem Fachmann bekannt.

Nachfolgend wird die vorliegende Erfindung anhand von Ausführungsbeispielen beschrieben. Dabei zeigen:
- Figur 1: den grundsätzlichen Aufbau eines ersten erfindungsgemäßen Ausführungsbeispiels auf Basis eines Wasserleitungsanschlusses.
- Figur 2: ein entsprechendes Ausführungsbeispiel, jedoch auf Basis eines befüllbaren Wasserreservoirs.
- Figur 3: die Durchströmeinheit sowie die Steuerung der in den Figuren 1 und 2 gezeigten Ausführungsbeispiele im Detail.
- Figur 4: ein weiteres Ausführungsbeispiel mit einer Milchschaumerzeugungseinheit.
- Figur 5: ein Ausführungsbeispiel zum Hinzusetzen einer Aromakomponente.
- Figur 6: ein weiteres Ausführungsbeispiel mit einer Dampfeinleitung entgegen der eigentlichen Durchströmungsrichtung.
- Figur 7: ein weiteres Ausführungsbeispiel mit einer separaten Pumpe für den Kaltwasserpfad.

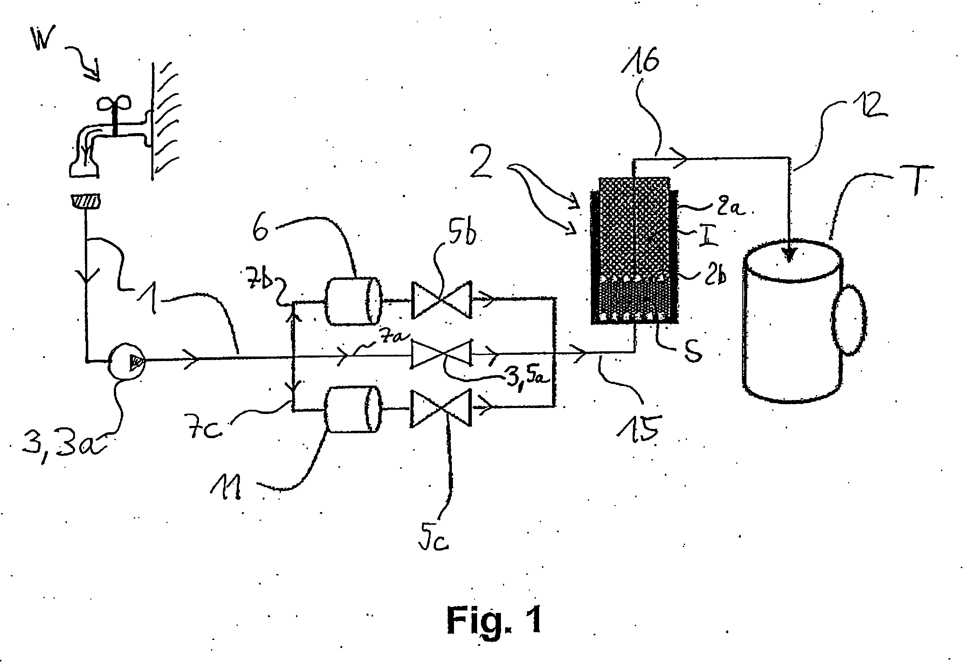

Das in Figur 1 gezeigte Ausführungsbeispiel ist als elektrisch betriebener Kaffeevollautomat zum Zubereiten von kaltem Kaffee ausgebildet. Die elektrischen und mechanischen Bauelemente eines solchen Vollautomaten sind dem Fachmann dabei grundsätzlich bekannt, so dass nachfolgend nur die erfindungsgemäßen Besonderheiten beschrieben sind.

Figur 1 zeigt eine erste erfindungsgemäße Vorrichtung, deren Wasserzulauf 1 ein Leitungsabschnitt ist, dessen eines Ende als ein Anschlussstück zum Anschließen des Wasserzulaufes 1 an das Wasserleitungssystem W ausgebildet ist. An dem diesem Ende abgewandten Ende verzweigt sich der Wasserzulauf 1 der Vorrichtung in drei separate, parallel geschaltete Wasserpfade 7a, 7b und 7c. Zwischen W und der Verzweigung zu den Wasserpfaden ist hier eine in ihrem Aufbau dem Fachmann bekannte Druckerhöhungseinrichtung 3a vorgesehen (diese ist hier z.B. eine Förderpumpe, die Druckerhöhungseinrichtung 3a kann aber auch weggelassen werden). Der erste Wasserpfad 7a ist ein Leitungsstück, in dem ein erstes Ventil 5a, mit dem der Leitungsabschnitt 7a verschlossen und wieder geöffnet werden kann, ausgebildet ist. Die Druckerhöhungseinrichtung 3a und das Ventil 5a bilden hier zusammen ein druckgebendes Element 3 für die nachfolgend beschriebene Durchströmeinheit 2.

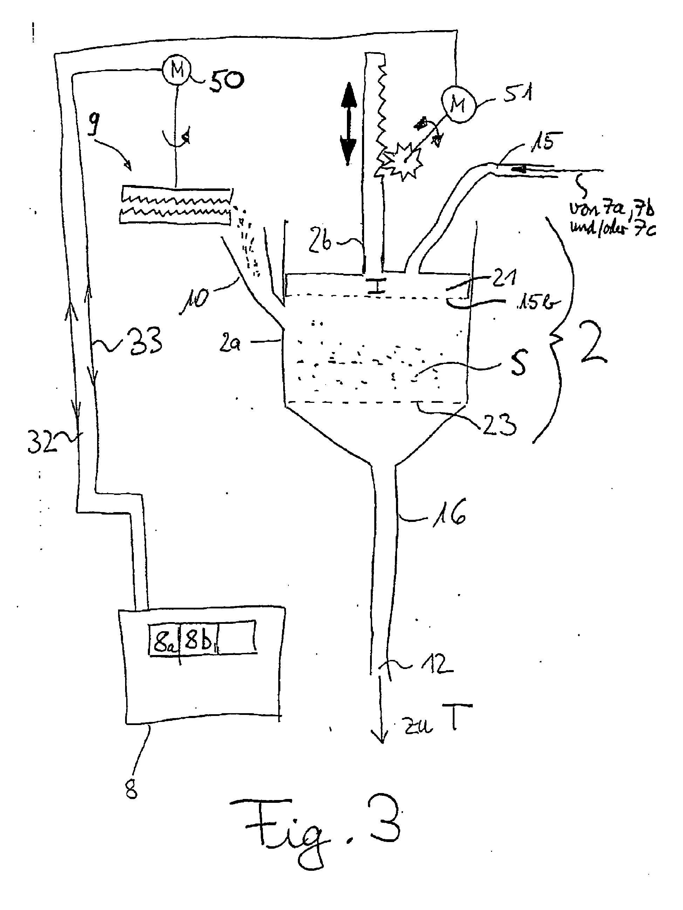

Im zweiten Wasserpfad bzw. Leitungsabschnitt 7b ist stromabwärts der Verzweigungsstelle zunächst ein elektrisch betriebener Erhitzer 6, dann stromabwärts desselben ein zweites Ventil 5b zum Verschließen und Öffnen des zweiten Leitungsabschnittes bzw. Wasserpfades 7b ausgebildet. Im dritten Leitungsabschnitt bzw. Wasserpfad 7c ist stromabwärts der Verzweigungsstelle zunächst ein Dampferzeuger 11 angeordnet, dem stromabwärts ein drittes Ventil 5c zum Verschließen und Öffnen des dritten Leitungsweges 7c folgt. Stromabwärts der drei Ventile 5a, 5b und 5c können sich die drei Wasserpfade 7a bis 7c zu einer gemeinsamen, in die Durchströmeinheit 2 führenden Zulaufleitung 15 vereinigen. Die Durchströmeinheit 2 weist eine verschließbare Brühkammer 2a sowie einen darin verschieblichen Brühkolben 2b zum Verpressen des zu durchströmenden Stoffes S (Kaffeemehl) im Brühzylinder 2a auf (siehe auch Figur 3).

Das mit Kaffeemehl S befüllbare Innenvolumen des Brühzylinders 2a ist hier mit dem Bezugszeichen I bezeichnet. Die Auslassleitung 16 führt über den Auslassabschnitt 12 in eine Tasse T zur Aufnahme des fertig gebrühten Kaffeegetränkes.

Wie Figur 3 zeigt, besitzt die Zulaufleitung 15 einen in das Innenvolumen I der Brühkammer 2a führenden Endabschnitt und endet in der Unterseite 21 des Brühkolbens 2b an einem Einlasssieb 15b, dessen Perforation so ausgebildet ist, dass ein Durchtritt von Wasser und Dampf möglich ist, jedoch ein Hindurchtreten von Kaffeemehl S vermieden wird. Über die drei Wasser- bzw. Leitungspfade 7a, 7b und 7c sowie über die Zulaufleitung 15 kann somit (siehe nachfolgend) nicht erhitztes Wasser, Heißwasser oder Dampf in das Innere I des Brühzylinders 2a der Durchströmeinheit 2 zum Durchströmen des Kaffeemehls S geleitet werden.

Im Brühzylinder 2a befindet sich ein Auslasssieb 23, dessen Perforation (ebenso wie beim Einlasssieb 15b) ein Hindurchtreten von Wasser und Dampf erlaubt, jedoch das Kaffeemehl S zurückhält. Zwischen der Unterseite 21 des Brühkolbens 2b und dem Auslasssieb 23 ist somit ein Verpressen des Kaffeemehls möglich, bevor, während oder nach dem dieses mit Wasser und/oder Dampf durchströmt wird (Kolbenbewegung hin zum Sieb 23). Der Kloben des Kolbens 2b ist hier mittels eines Motors 51 bewegbar. Die genaue Ausführung ist dem Fachmann bekannt.

Die Vorrichtung weist ein Mahlwerk 9 mit verstellbarer Geometrie auf. Das Mahlwerk 9 ist über ein abschüssiges Fallrohr 10, das im oberen Bereich des Brühzylinders 2a in dessen Innenraum I mündet, mit der Durchströmeinheit 2 verbunden. Mit dem Mahlwerk 9 gemahlene Kaffeebohnen rutschen oder fallen somit schwerkraftbedingt über das Fallrohr 10 in das Innere I des Brühzylinders 2a. Zu diesem Zeitpunkt befindet sich der Brühkolben 2b innerhalb des Brühzylinders 2a in seiner obersten Stellung, so dass seine Unterseite 21 oberhalb der Einmündung des Fallrohres 10 liegt. Dies ermöglicht den freien Zugang zum Inneren I des Brühzylinders 2a über das Fallrohr 10.

Alternativ dazu (hier nicht gezeigt) kann statt eines Mahlwerkes jedoch auch eine Dosiereinheit für bereits vorgemahlenen Kaffee vorgesehen sein, mit der der Kaffee dem Inneren I des Brühzylinders 2a zugeführt werden kann. Die Zufuhr von bereits vorgemahlenem Kaffee kann auch per Handeinwurf erfolgen.

Die Vorrichtung weist eine Steuereinheit 8 auf. Diese umfasst einen Speicher 8a sowie eine Mikroprozessor (nicht gezeigt). Im Speicher sind geeignete Steuerprogramme 8b für die Vorrichtung ausgebildet, mit ohne Hervorheben denen wie nachfolgend noch im Detail beschrieben das Mahlen, das Verpressen, das Schalten der Heizung, das Zuleiten von nicht erhitztem Wasser, von erhitztem Wasser oder von Dampf sowie das Auslassen des entsprechend hergestellten Kalt- oder Heißgetränkes gesteuert werden können. Die Steuereinheit 8 ist dazu über Steuerleitungen mit den einzelnen zu steuernden Elementen der Vorrichtung verbunden.

So ermöglicht eine Leitung 33 eine Ansteuerung der Motorsteuerung 50 des Mahlwerkes 9. Eine weitere Leitung 32 ermöglicht das Ansteuern der Motorsteuerung 51 des Brühkolbens 2b. Schließlich ist die Steuereinheit 8 über weitere, hier nicht gezeigte Leitungen, mit der Druckerhöhungseinrichtung 3a, mit dem Ventil 5a im Leitungsweg 7, den beiden Ventilen 5b und 5c in den Leitungswegen 7b und 7c sowie dem Durchlauferhitzer und dem Dampferzeuger 11 zur Steuerung dieser Elemente verbunden.

Erfindungsgemäß kann nun Kaffee wie folgt kalt extrahiert werden:
Der Wasserzulauf 1 wird mit dem Wasserleitungssystem W verbunden. Die Ventile 5a bis 5c sind verschlossen. Der Benutzer wählt als zuzubereitendes Getränk kalten Kaffee.

Die Steuereinheit 8 steuert das Mahlwerk 9 an und stellt einen speziellen Mahlgrad und das Mehlvolumen des Mahlwerkes 9 auf den gewünschten Wert ein. Zunächst befindet sich der Brühkolben 2b in geöffneter Stellung. Die Brühkammer wird befüllt und geschlossen und kann, wenn gewünscht, das Kaffeemehl S verpressen.

Anschließend öffnet die Steuereinheit 8 das Ventil 5a, so dass nicht erhitztes Wasser aus dem Wasserleitungssystem W durch den Wasserzulauf 1, den Wasserweg 7a und die Zulaufleitung 15 in das Innere der Brühkammer 2a und durch das evtl. verpresste Kaffeemehl S strömt, bevor der fertige, kalt extrahierte Kaffee über die Auslassleitung 16 sowie den Auslassabschnitt 12 in die Tasse T fließt. Nach Durchfluss der vorbestimmten Wassermenge verschließt die Steuereinheit 8 das Ventil 5a.

Wahlweise kann der Benutzer der gezeigten Vorrichtung nun dem Kaltextrahieren über die Leitung 7a ein Initiieren des Kaffeemehls S mit Dampf und/oder Heißwasser wie folgt zuschalten. (Dies kann beispielsweise durch ein Programmwahltaste am Gehäuse der Vorrichtung, die ein entsprechendes Programm 8b im Speicher 8a aufruft, oder der ein Programm fest zugeordnet ist, geschehen.)

Zur Verbesserung der Extraktion kann die Steuereinheit 8 ein Initiieren der Kaltbrühung durch vorheriges Heißbrühen mit heißem Wasser oder Bedampfen des Kaffeemehls S mit Dampf durchführen. Im ersten Fall wird zunächst nicht das Ventil 5a im Leitungsweg 7a geöffnet, sondern dieses zunächst geschlossen gehalten und das Ventil 5b im Leitungsweg 7b geöffnet, sowie der Wassererhitzer 6 im Leitungsweg 7b von der Steuereinheit 8 angesteuert.

Eine geringe Menge Wasser fließt somit über den Wasserzulauf 1 für eine vorbestimmte Heißbrühzeit t_{B} von beispielsweise 1 bis 5 Sekunden durch den aktiven Erhitzer 6 (und wird dort erhitzt), durch das Ventil 5b sowie den Zulauf 15, strömt in das Kaffeemehl S in der Durchströmeinheit 2 und gelangt in die Tasse T. Anschließend wird das Ventil 5b geschlossen und eine Brühpausenzeit von t_{P} von beispielsweise 1 bis 10 Sekunden eingelegt. Danach erfolgt ein Öffnen des Ventils 5a und ein Kaltbrühen mit einer deutlich größeren Wassermenge, wie es vorstehend bereits beschrieben wurde.

Statt eines Vorbereitens des Kaltbrühens mit Heißwasser kann die Steuereinheit 8 auch (anstelle des Ventils 5b) das Ventil 5c im Leitungsweg 7c öffnen: Wasser strömt durch den Dampferzeuger 11, wird in Dampf gewandelt, strömt anschließend über den Zulauf 15 in die Brühkammer 2a und verlässt diese über den Weg 16 und 12. Die Vorbedampfungszeit kann beispielsweise zwischen 2 und 10 Sekunden betragen, bevor das Ventil 5c verschlossen wird. Anschließend erfolgt - ggf. nach einer Brühpause über ein Zeitintervall der Länge t_{P} - ein Öffnen des Ventils 5a und ein Kaltbrühen wie vorbeschrieben.

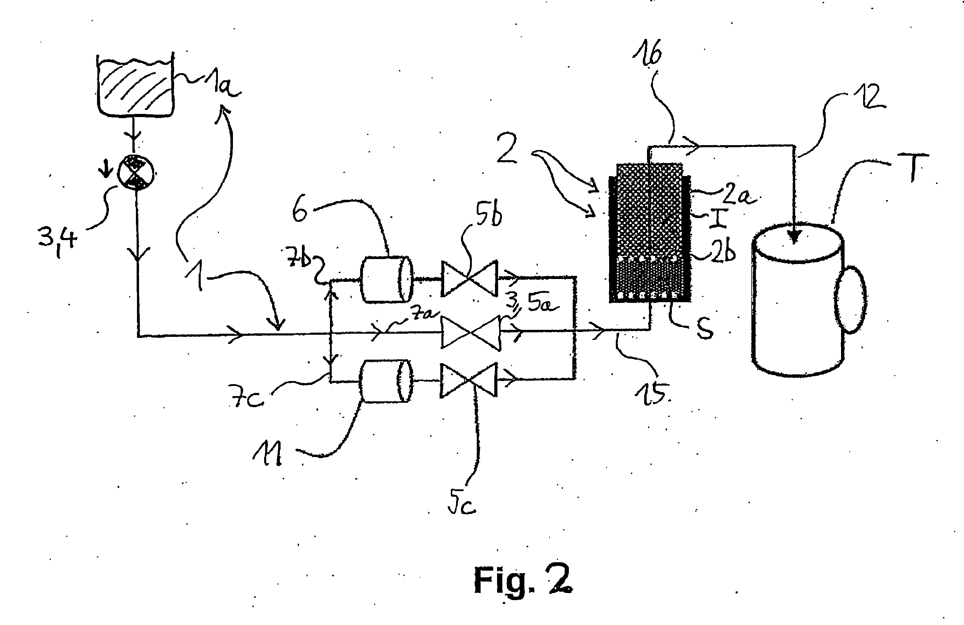

Figur 2 zeigt ein weiteres erfindungsgemäßes Ausführungsbeispiel, bei dem die Vorrichtung grundsätzlich ebenso wie in den Figuren 1 und 3 beschrieben aufgebaut ist und gesteuert wird. Nachfolgend werden daher nur die Unterschiede beschrieben.

Anstelle eines Anschlusses des Wasserzulaufs 1 für ein Wasserleitungssystem W umfasst der Wasserzulauf 1 hier ein befüllbares Wasserreservoir 1a (Vorratsbehälter), der innerhalb oder außerhalb des Gehäuses (nicht gezeigt) der Vorrichtung angeordnet ist und mit Wasser aus einem Wasserleitungssystem befüllt werden kann. Die in die Leitungswege 7a, 7b, 7c einmündende Leitung des Wasserzulaufs 1 umfasst eine druckerzeugende Förderpumpe 4, die Wasser vom Wasserreservoir 1 in die Leitungswege 7a, 7b, 7c fördert. Die Pumpe 4 wird so gesteuert (z.B. mit der Steuereinheit 8), dass die Durchströmeinheit 2 über den Leitungsweg 7a (in dem das Ventil 5a sitzt) mit nicht erhitztem Wasser unter einem vordefinierten Druck von beispielsweise 0.5 bis 20 bar durchströmt wird. Entsprechend kann mit der Pumpe 4 wahlweise Wasser zum Wassererhitzer 6 oder zum Dampferzeuger 11 geleitet werden. Die Einheit 3a aus Fig. 1 entfällt somit; hier bilden die Elemente 4 und 5a das druckgebende Element 3 aus.

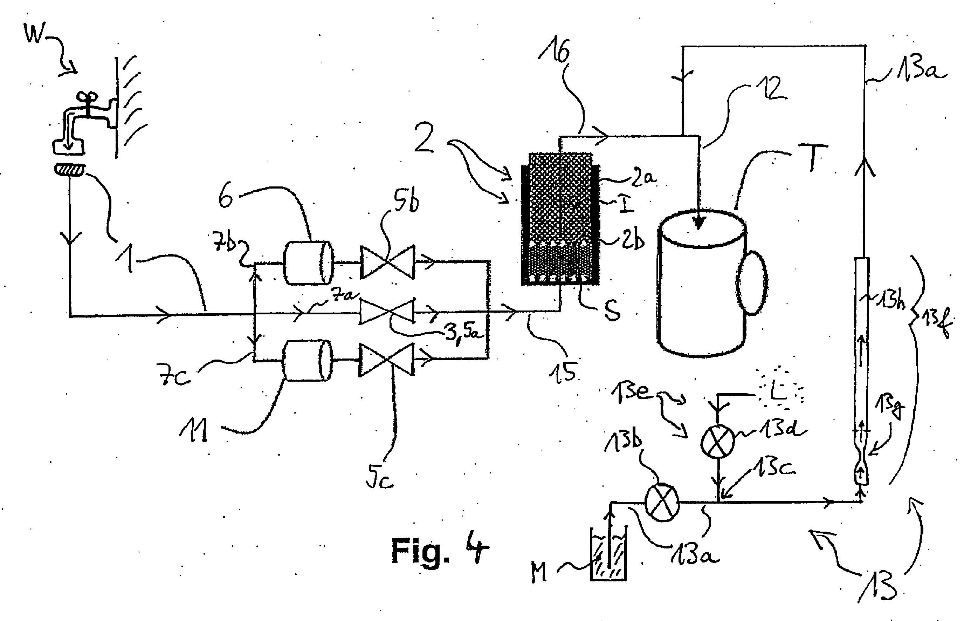

Figur 4 zeigt ein drittes Ausführungsbeispiel. Auch dieses Ausführungsbeispiel ist grundsätzlich wie das in Figuren 1 und 3 beschriebene ausgebildet, so dass nachfolgend erneut lediglich die Unterschiede beschrieben werden. (Auch hier entfällt die Einheit 3a.)

Der in Figur 4 gezeigte Kaffeevollautomat zur Kaltbrühung weist eine Milchschaumerzeugungseinheit 13 auf. Diese umfasst eine Milchleitung 13a, die in den Auslassabschnitt 12 der Vorrichtung mündet und somit dazu ausgebildet ist, dem fertigen kalten Kaffee kalten Milchschaum und/oder kalte Milch zuzusetzen. Hierzu weist die Milchleitung 13a an ihrem stromaufwärtigen Ende eine in einen mit Milch M gefüllten Behälter eintauchbare Ansaugöffnung auf. Die Milch M kann mittels einer in der Milchleitung 13a stromabwärts der Ansaugöffnung angeordneten Fördereinrichtung 13b (hier: Pumpe) gefördert und in einen stromabwärts der Fördereinrichtung 13b als Teil der Milchleitung 13a ausgebildeten Mischabschnitt 13f gefördert werden.

Zwischen dem Mischabschnitt 13f und der Fördereinrichtung 13b führt eine Luftzufuhrleitung 13e über ein T-förmiges Mündungsstück 13c in die Milchleitung 13a. In dieser Leitung 13e ist eine Luft-Fördereinrichtung 13d (hier: Pumpe) ausgebildet, mit der Luft L unter Druck in die Milchleitung 13a eingespeist werden kann. Das die Mündung 13c stromabwärts verlassende Milch-Luft-Gemisch tritt in den Mischabschnitt 13f ein, der an seinem stromaufwärtsseitigen Ende z.B. eine Engstelle 13g und stromabwärts davon eine Entspannungsstrecke 13h aufweist.

Das Luft-Milch-Gemisch (kalter Milchschaum) gelangt dann stromabwärts in den Auslassabschnitt 12 der Vorrichtung und in die Tasse T . Bei deaktivierter Luftzufuhr wird entsprechend des beschriebenen Vorgangs Milch anstelle von Milchschaum über den Auslassabschnitt 12 der Vorrichtung und in die Tasse T geleitet.

Die Milchschaumzufuhr, also die Fördereinrichtungen 13b und 13d (sowie hier nicht gezeigte Absperrventile in den Leitungen 13a und 13e) werden über die Steuereinheit 8 geregelt.

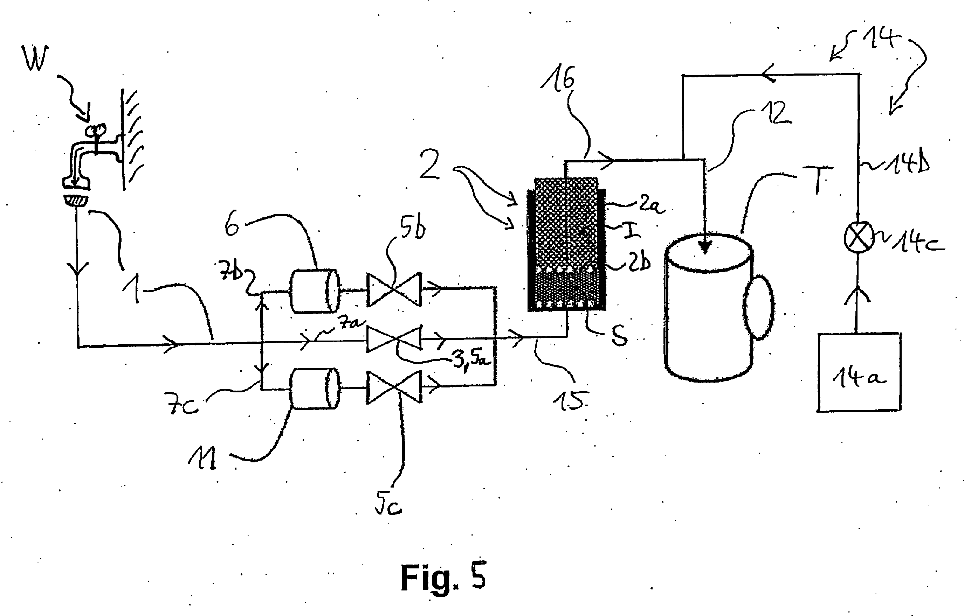

Figur 5 zeigt schließlich ein viertes Ausführungsbeispiel. Auch dieses ist grundsätzlich wie in dem in den Figuren 1 und 3 gezeigten Fall ausgebildet, so dass nachfolgend nur die Unterschiede beschrieben werden.

Die in Figur 5 gezeigte Vorrichtung dient dem Zusetzen einer Aromakomponente zum kaltgebrühten Getränk: Hierzu weist die Vorrichtung einen Zusatzabschnitt 14 auf. Dieser umfasst einen Vorratsbehälter 14a, der mit der Aromakomponente (z.B. Sirup) gefüllt ist. Stromabwärts des Vorratsbehälters 14a ist in einem den Vorratsbehälter 14a mit dem Auslassabschnitt 12 verbindenden Leitungsabschnitt 14b ist eine Fördereinrichtung (hier: Pumpe) 14c angeordnet, mit der dem Auslassabschnitt 12 eine Aromakomponente in gewünschter Menge zugesetzt werden kann. Die Steuerung der Fördereinrichtung 14c sowie entsprechender Absperrventile (nicht gezeigt) im Leitungsabschnitt 14b erfolgt programmgesteuert über die Steuereinheit 8.

Selbstverständlich kann der Leitungsabschnitt 14b statt in den Auslassabschnitt 12 unabhängig von letzterem auch direkt in die Tasse T führen. In der Regel werden zudem mehrere mit dem Abschnitt 14b verbundene Behälter 14a zum wahlweisen Zusetzen unterschiedlicher Aromakomponenten vorhanden sein.

Entsprechende Wahltasten (nicht gezeigt) ermöglichen dem Benutzer der in den Figuren 4 und 5 gezeigten Vorrichtungen eine selektive Wahl des kalten Milchschaums bzw. der Aromakomponente(n). Milchschaumerzeugungseinheit 13 und Zusetzabschnitt 14 können auch in ein und demselben Kaltextraktions-Kaffeevollautomaten ausgebildet sein.

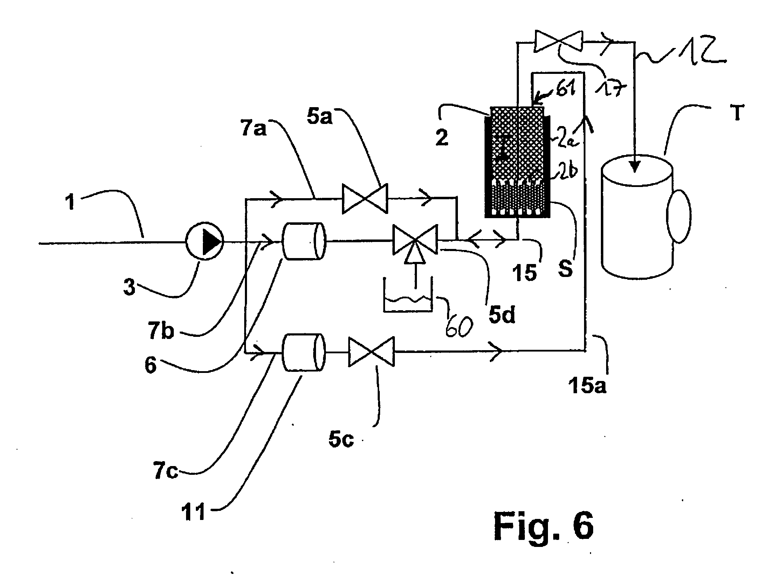

Figur 6 zeigt ein weiteres Ausführungsbeispiel für einen erfindungsgemäßen Kaltextraktions-Kaffeevollautomaten. Dieser Vollautomat ist so wie derjenige in Figur 1 aufgebaut, so dass nachfolgend nur die Unterschiede beschrieben werden. (Zudem ist das Wasserleitungssystem W, mit dem dem Wasserzulauf Wasser zugeführt wird, hier nicht gezeigt).

Im Wasserzulauf 1 der Vorrichtung ist eine Druckerzeugende Förderpumpe 3 ausgebildet, so dass das druckgebende Element hier durch diese Fördereinrichtung 3 sowie das Ventil 5a des ersten Wasserpfades 7a ausgebildet ist. Der zweite, parallel zum ersten Wasserpfad 7a geschaltete Wasserpfad 7b umfasst hier neben dem Heißwassererzeuger 6 stromabwärts dieses Heißwassererzeugers anstelle des Ventils 5b ein Umschaltventil 5d, sowie, mit diesem verbunden, eine Abwasserleitung samt Abwasserbehälter 60. Wie im in Figur 1 gezeigten Fall vereinigen sich die beiden Wasserpfade 7a und 7b stromabwärts der Ventile 5a und 5d und führen über die Zulaufleitung 15 in die Durchströmeinheit 2 (vgl. Figur 3). Im Auslassabschnitt 12 der Vorrichtung zur Tasse T ist ein Absperrventil 17 angeordnet.

Auch die in Figur 6 gezeigte Vorrichtung verzweigt sich (stromabwärts der Fördereinrichtung 3) nicht nur in die beiden vorbeschriebenen Wasserpfade 7a, 7b, sondern zusätzlich auch in einen dritten Wasserpfad 7c, in dem wie bei der in Figur 1 gezeigten Vorrichtung ein Dampferzeuger 11 und stromabwärts desselben ein Ventil 5c angeordnet sind. Der stromabwärts des Ventils 5c ausgebildete Leitungsabschnitt 15a dieses dritten Wasserpfades 7c führt jedoch, im Unterschied zu Figur 1, über einen separaten Einlass 61 (in Figur 3 nicht gezeigt), der stromabwärts des Auslasssiebes 23 in den Auslassbereich des Brühzylinders 2a mündet, in die Durchströmeinheit 2.

Mittels der Steuereinheit 8 kann die in Figur 6 gezeigte Vorrichtung grundsätzlich wie die in Figur 1 gezeigte Vorrichtung angesteuert werden. Dabei sind jedoch, aufgrund des Umschaltventils 5d sowie des im unteren Bereich der Durchströmeinheit 2 einmündenden Zulaufs 61 des Leitungsabschnitts 15a des dritten Wasserpfads 7c, die beiden folgenden Schaltungen möglich: Eine erste Schaltung, bei der das Umschaltventil 5d in stromabwärtiger Richtung geschaltet ist (also einen Wasserfluss vom Heißwassererzeuger 6 hin zum Zulauf 15 (vgl. Figur 3) und in die Durchströmeinheit 2 ermöglicht (Funktionsweise analog wie bei Figur 1)). Zusätzlich kann das Umschaltventil 5d mittels der Steuereinheit 8 auch in stromaufwärtige Richtung (d.h. vom Zulauf 15 in Richtung zum Heißwassererzeuger 6) geschaltet werden. In diesem Fall strömt (bei geschlossenen Ventilen 5a und 17) Dampf über den Leitungsweg 15a über den Zulauf 61 in die Durchströmeinheit 2, durchströmt das darin angeordnete Kaffeemehl S und fließt schließlich über den Leitungsabschnitt 15 sowie das in stromaufwärtige Richtung geschaltete Umschaltventil 5d über die Abwasserleitung in den Abwasserbehälter 60.

Somit kann mit der in Figur 6 gezeigten Vorrichtung das Initiieren des Kaffeemehls S mit Dampf in der Durchströmeinheit 2 in umgekehrter Strömungsrichtung erfolgen. Mit diesem Dampf beim Ausströmen über den Zulauf 15 mitgeführte Wasseranteile werden dann in dem Abwasserbehälter 60 gesammelt.

Zudem erlaubt die Steuereinheit 8 eine Ansteuerung der Ventile 5c, 5d und 17 in der Art, dass der Dampf über den Zulauf 61 in die Durchströmeinheit 2 gelangt und das darin angeordnete Kaffeemehl S durchströmt, wobei der Dampf jedoch nicht durch das Umschaltventil 5d und über die Abwasserleitung in den Abwasserbehälter 60 gelangen kann, sondern sich vor dem Ventil 5d aufstaut und so ein vom Dampf erzeugter Überdruck in der Durchströmeinheit 2 und dem Kaffeemehl S entsteht.

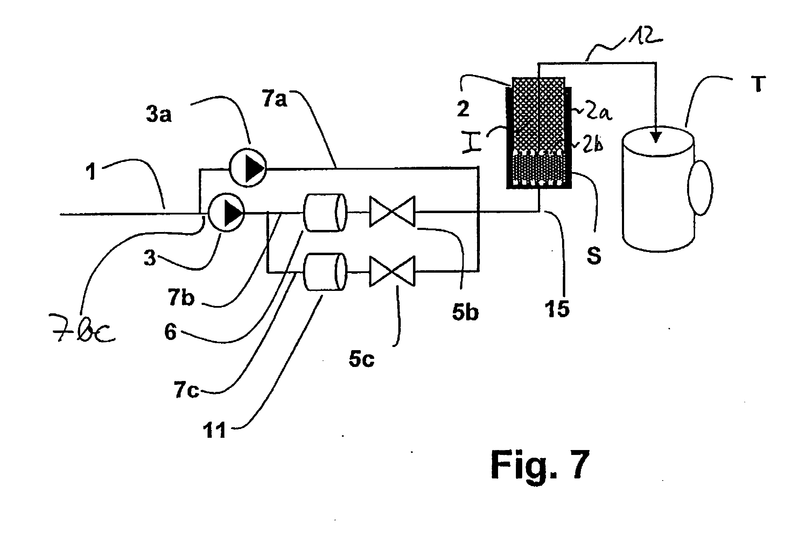

Figur 7 zeigt schließlich ein Ausführungsbeispiel eines erfindungsgemäßen Kaltextraktions-Kaffeevollautomaten, bei dem eine separate Pumpe für den Kaltwasserpfad vorgesehen ist. Auch dieses Ausführungsbeispiel ist grundsätzlich wie das in Figur 1 gezeigte aufgebaut (Wasserleitungssystem W hier nicht gezeigt), so dass nachfolgend lediglich die Unterschiede beschrieben werden.

Der Wasserzulauf 1 verzweigt sich stromaufwärts der Durchströmeinheit 2 zunächst in den ersten Wasserpfad 7a, in dem eine erste Wasserpumpe 3a als druckerhöhende Fördereinrichtung ausgebildet ist, und in einen weiteren Wasserpfad 7bc. Im Wasserpfad 7bc ist stromabwärts der vorgenannten Verzweigung eine weitere, zweite Wasserpumpe 3 als Fördereinrichtung vorgesehen. Stromabwärts dieser zweiten Förderpumpe 3 verzweigt sich der Wasserpfad 7bc schließlich in den zweiten Wasserpfad 7b (der wie im in Figur 1 gezeigten Fall den Heißwassererzeuger 6 und stromabwärts desselben das Ventil 5b beinhaltet) und in den dritten Wasserpfad 7c (der wie in Figur 1 den Dampferzeuger 11 sowie stromabwärts desselben das Ventil 5c beinhaltet). Stromabwärts der Fördereinrichtung 3a (erster Wasserpfad) bzw. der Ventile 5b, 5c (zweiter und dritter Wasserpfad 7b, 7c) vereinigen sich die getrennten Wasserpfade und führen über die gemeinsame Zulaufleitung 15 in die Durchströmeinheit 2.

Im in Figur 7 gezeigten Fall kann somit über die beiden über die Steuereinheit 8 separat ansteuerbaren Wasserpumpen 3, 3a die in der Brüh- bzw. Extraktionskammer 2a der Durchströmeinheit 2 herrschenden Durchströmparameter beim Durchströmen mit nicht erhitztem Wasser (Leitungsweg 7a) unabhängig von dem beim Durchströmen der Kammer 2a mit Heißwasser bzw. Dampf herrschenden Durchströmparametern durch geeignete Ansteuerung der Pumpen 3a, 3 über die Steuereinheit 8 eingestellt werden.

## Patentansprüche

1. Vorrichtung zur zubereitung von kalt extrahiertem Kaffee oder von kalt extrahiertem Espresso aus mit Wasser zu durchströmendem Kaffeemehl (S),
mit einem zum Anschluss der Vorrichtung an ein externes Wasserleitungssystem (W) ausgebildeten und/oder ein internes oder externes befüllbares Wasserreservoir (1a) umfassenden Wasserzulauf (1), und mit einer zur Aufnahme des Kaffeemehls (S), bevorzugt in Schüttgutform, und zum Durchströmen desselben mit Wasser aus dem Wasserzulauf (1) ausgebildeten Durchströmeinheit (2), wobei die Durchströmeinheit (2) zum zuleiten des Wassers ohne Zwischenschalten eines Wassererhitzers und/oder über einen abschaltbaren oder abgeschalteten Wassererhitzer so mit dem Wasserzulauf (1) verbindbar ist oder verbunden ist, dass nicht erhitztes Wasser durch die Durchströmeinheit (2) leitbar ist, sowie
mit einem Wassererhitzer (6), mit dem Wasser aus dem Wasserzulauf (1) erhitzbar und anschließend der Durchströmeinheit (2) zum Durchströmen des Kaffeemehls (S) mit dem erhitzten Wasser zuleitbar ist,
wobei die Vorrichtung ausgebildet ist zum Durchströmen der Durchströmeinheit (2), für eine vorbestimmte Heißbrühzeit t_{B} oder mit einer ersten vorbestimmten Wassermenge, mit erhitztem Wasser aus dem Wassererhitzer (6) und, bevorzugt nach der Heißbrühzeit t_{B} oder dem Durchlauf der vorbestimmten Wassermenge, für eine vorbestimmte Kaltbrühzeit t_{K} oder mit einer zweiten vorbestimmten Wassermenge und unter Umgehen oder Abschalten des Wassererhitzers (6) mit nicht erhitztem Wasser aus dem Wasserzulauf (1),
*gekennzeichet durch*
zwei parallel geschaltete Wasserpfade (7a, 7b) zwischen wasserzulauf (1) und Durchströmeinheit (2), einen ersten Wasserpfad (7a), der den Wasserzulauf (1) ohne Zwischenschalten eines Wassererhitzers und/oder ohne aktiv und/oder passiv gesteuerte Veränderung der Temperatur des Wassers mit der Durchströmeinheit (2) verbindet, und einen zweiten Wasserpfad (7b), der den Wasserzulauf (1) über den Wassererhitzer (6) mit der Durchströmeinheit (2) verbindet.

2. Vorrichtung nach dem vorhergehenden Anspruch,
***dadurch gekennzeichnet*, *dass****,*
bevorzugt mittels einer bevorzugt entweder manuell schaltbaren oder Mikroprozessor-gesteuerten Steuereinheit (8) und/oder bevorzugt mittels mehrerer, insbesondere als Ventil(e) ausgebildeten/r Absperreinheit(en) (5a, 5b, 5c, 5d), die Heißbrühzeit t_{B}, die Kaltbrühzeit t_{K}, die während dieser Zeiten jeweils durch die Durchströmeinheit (2) hindurch strömenden Mengen an Wasser und/oder die erste und/oder zweite wassermenge einstellbar ist/sind, wobei bevorzugt das Verhältnis der während t_{B} fließenden Menge an erhitztem Wasser und der während t_{K} fließenden Menge an nicht erhitztem Wasser auf einen Wert zwischen 1:200 und 1:1, besonders bevorzugt zwischen 1:100 und 1:2, einstellbar ist.

3. Vorrichtung nach einem der vorhergehenden Ansprüche,
***dadurch gekennzeichnet, dass**,*
bevorzugt mittels der Steuereinheit (8), eine vorbestimmte Pausenzeit t_{P} zwischen einem Durchströmen t_{B} der Durchströmeinheit (2) mit erhitztem Wasser und einem anschließenden Durchströmen t_{K} mit nicht erhitztem Wasser einstellbar ist, wobei t_{P} bevorzugt zwischen 0.1 und 600 Sekunden, bevorzugt zwischen 0.5 und 300 Sekunden beträgt.

4. Vorrichtung nach einem der vorhergehenden Ansprüche,
***gekennzeichnet durch***
ein druckgebendes Element (3) zum Realisieren eines definierten wasserdrucks oder wasserdruckverlaufes in der Durchströmeinheit (2) beim Durchströmen des Kaffeemehls (S) mit Wasser,
wobei der definierte Wasserdruck bevorzugt im Bereich zwischen 0,1 und 50 bar, besonders bevorzugt zwischen 0,5 und 15 bar liegt.

5. Vorrichtung nach einem der vorhergehenden Ansprüche,
***dadurch gekennzeichnet, dass***
der wassererhitzer ein thermisch oder elektrisch betriebener Durchlauferhitzer ist.

6. Vorrichtung nach einem der vorhergehenden Ansprüche bei Rückbezug auf Anspruch 4,
***dadurch gekennzeichnet, dass***
das Element (3) eine druckerzeugende Fördereinheit (4), insbesondere eine Wasserpumpe, und/oder eine erste Absperreinheit (5a), insbesondere ein Ventil, umfasst,
wobei das Element (3) bevorzugt eine im Strömungspfad des Wassers zwischen dem zum Anschluss der Vorrichtung an ein unter Druck stehendes, externes Wasserleitungssystem (W) ausgebildeten Wasserzulauf (1) und der Durchströmeinheit (2) angeordnete Absperreinheit (5a) ist, die so ausgebildet ist, dass ein Durchströmen der Durchströmeinheit (2) mit Wasser nur mit einem vorbestimmten Mindest-wasserdruck erfolgen kann,
oder
wobei das Element (3) bevorzugt eine im Strömungspfad des Wassers zwischen dem externen Wasserleitungssystem (W) und/oder dem Wasserreservoir (1a) und der Durchströmeinheit (2) angeordnete druckerzeugende Fördereinheit (4), insbesondere eine Förderpumpe, ist, die so ausgebildet ist, dass ein Durchströmen der Durchströmeinheit (2) mit Wasser mit einem definierten Mindest-wasserdruck erfolgt.

7. Vorrichtung nach einem der vorhergehenden Ansprüche,
***dadurch gekennzeichnet, dass***
die Vorrichtung wahlweise, beispielsweise durch eine an einem Gehäuse der Vorrichtung angeordnete Getränkewahltaste, auch das zubereiten warmen oder heißen Kaffees oder Espressos erlaubt, indem Wasser aus dem Wasserzulauf (1) der Durchströmeinheit (2) ausschließlich oder teilweise über den Wassererhitzer (6) zuleitbar ist.

8. Vorrichtung nach dem vorhergehenden Anspruch,
***dadurch gekennzeichnet,* dass**
eine bevorzugt mikroprozessorgesteuerte Steuereinheit (8), mit der ein oder mehrere für das Zubereiten des Kaffees oder Espressos in der und/oder mit der Vorrichtung einzustellende(r) Durchströmparameter abhängig davon, ob ein Kaltgetränk, ein Warmgetränk oder ein Heißgetränk zubereitet werden soll, unterschiedlich einstellbar ist/sind.

9. Vorrichtung nach dem vorhergehenden Anspruch,
dadurch *gekennzeichet, dass*
als Durchströmparameter der Mahlgrad und/oder die Mehlmenge eines vor der Zufuhr in die Durchströmeinheit (2) in ungemahlener Form als Kaffeebohnen vorliegenden Kaffeemehls (S), die zeitdauer (n) des Durchströmens der Durchströmeinheit (2) mit Wasser und/oder der Druck des Wassers beim Durchströmen der Durchströmeinheit (2) für ein Kaltgetränk oder ein Heißgetränk unterschiedlich auswählbar und/oder einstellbar ist/sind,
wobei die Vorrichtung bevorzugt aufweist:
mindestens ein, bevorzugt zwei verschiedene, über die Steuereinheit (8) steuerbare(s) Mahlwerk(e) (9), mit dem/denen der Mahlgrad und/oder die Mehlmenge beeinflussbar ist/sind, und
einen Transportabschnitt (10), insbesondere ein Fallrohr oder eine Rutsche, mit dem/der das gemahlene Kaffeemehl vom Mahlwerk (9), von einer Dosiereinrichtung, von einem Dosierbehälter oder von einem Einwurfschacht in die Durchströmeinheit (2) transportierbar ist.

10. Vorrichtung nach einem der vorhergehenden Ansprüche,
***gekennzeichnet durch***
einen Dampferzeuger (11), insbesondere einen Durchlauferhitzer, Wärmetauscher oder einen Boiler, mit dem Wasser, bevorzugt aus dem Wasserzulauf (1) stammendes Wasser, erhitzbar, in Wasserdampf wandelbar und anschließend der Durchströmeinheit (2) zum Durchströmen des Kaffeemehls (S) mit Wasserdampf zuleitbar ist, und
**dadurch**, dass die Vorrichtung ausgebildet ist zum Durchströmen der Durchströmeinheit (2) für eine vorbestimmte Heißdampfzeit t_{D} mit Dampf aus dem Dampferzeuger (11) und/oder mit einer vorbestimmten Dampfmenge aus dem Dampferzeuger (11) und, bevorzugt nach der Heißdampfzeit t_{D} und/oder dem Durchströmen mit der vorbestimmten Dampfmenge, unter umgehen oder nach dem Abschalten des/eines Wassererhitzers (6) und/oder des Dampferzeugers (11) zum Durchströmen der Durchströmeinheit (2) für eine vorbestimmte Kaltbrühzeit t_{K} mit nicht erhitztem Wasser aus dem Wasserzulauf (1) und/oder mit einer vorbestimmten Menge nicht erhitzten Wassers aus dem Wasserzulauf (1).

11. Vorrichtung nach dem vorhergehenden Anspruch,
**gekennzeichnet *durch***
zwei parallel geschaltete Wasserpfade (7a, 7c) zwischen Wasserzulauf (1) und Durchströmeinheit (2), einen ersten Wasserpfad (7a), der den Wasserzulauf (1) ohne Zwischenschalten eines wassererhitzers und/oder ohne aktiv und/oder passiv gesteuerte Veränderung der Temperatur des Wassers mit der Durchströmeinheit (2) verbindet, und einen dritten Wasserpfad (7c), der den Wasserzulauf (1) über den Dampferzeuger (11) mit der Durchströmeinheit (2) verbindet,
und/oder
mindestens eine, bevorzugt mehrere insbesondere als Ventil (e) ausgebildete Absperreinheit (en) (5a, 5c) und eine diese Absperreinheit(en) steuernde Steuereinheit (8), bevorzugt eine manuell schaltbare, oder eine mikroprozessorgesteuerte Steuereinheit, zum Einstellen der Heißdampfzeit t_{D} und der Kaltbrühzeit t_{K} und/oder der während dieser Zeiten jeweils **durch** die Durchströmeinheit (2) hindurch strömenden Mengen an Dampf bzw. Wasser,
und/oder
**dadurch**, dass, bevorzugt mittels der Steuereinheit (8), eine vorbestimmte Pausenzeit t_{P} zwischen einem Durchströmen t_{D} der Durchströmeinheit (2) mit Dampf und einem anschließende Durchströmen t_{K} mit nicht erhitztem Wasser einstellbar ist, wobei t_{P} bevorzugt zwischen 0.1 und 600 Sekunden, bevorzugt zwischen 0.5 und 300 Sekunden beträgt.

12. Vorrichtung nach einem der beiden vorhergehenden Ansprüche,
***dadurch gekennzeichnet, dass**,*
zum Zweck eines Initiieren des Kaffeemehls (S) mit Dampf, die Vorrichtung nicht zum Durchströmen der Durchströmeinheit (2) mit Dampf ausgebildet ist, sondern stattdessen zum Einleiten von Dampf aus dem Dampferzeuger (11) in die Durchströmeinheit (2) für eine vorbestimmte Heißdampfzeit t_{D} und/oder gemäß einer vorbestimmten Dampfmenge so ausgebildet ist, dass der eingeleitete Dampf die Durchströmeinheit (2) während des Einleitens und für eine weitere vorbestimmte zeit von beispielsweise zwischen 2 und 10 Sekunden nicht wieder verlassen kann, wodurch ein Überdruck in der Durchströmeinheit (2) ausbildbar ist.

13. Vorrichtung nach einem der vorhergehenden Ansprüche,
***dadurch gekennzeichnet*, *dass***
die Vorrichtung weder eine aktive Kühleinheit zum Kühlen von Wasser und/oder des zubereiteten Kaffees oder Espressos, wie beispielsweise ein aktives Kühlaggregat, einen Kompressor oder ein Peltierelement, noch eine passive Kühleinheit zum Kühlen von Wasser und/oder des zubereiteten Kaffees oder Espressos, wie beispielsweise einen Wärmetauscher oder einen Absorber, aufweist.

14. Zum Zubereiten von kaltem Kaffee oder von kaltem Espresso ausgebildete Vorrichtung nach einem der vorhergehenden Ansprüche, insbesondere elektrisch betriebener Kaffeevollautomat,
***gekennzeichnet durch***
einen Auslassabschnitt (12), mit dem der die Durchströmeinheit (2) verlassende kalte Kaffee oder Espresso einem externen Gefäß (T) zuführbar ist, und
eine Milchschaumerzeugungseinheit (13), mit der kalter Milchschaum erzeugbar und mit dem Auslassabschnitt (12) dem kalten Kaffee oder Espresso oder, getrennt vom Auslassabschnitt (12), dem externen Gefäß (T) zusetzbar ist.

15. Vorrichtung nach dem vorhergehenden Anspruch,
**dadurch *gekennzeichnet, dass***
die Milchschaumerzeugungseinheit (13) aufweist:
• eine Milchleitung (13a) zum Zuleiten und Transportieren von Milch (M), enthaltend eine Milchfördervorrichtung (13b), insbesondere eine Milchpumpe,
• eine in die Milchleitung (13a) mündende, eine Luftfördervorrichtung (13d), insbesondere eine Luftpumpe, aufweisende Luftzuführung (13e) zum Zuführen von Luft (L), und
• einen stromabwärts der Mündung (13c) der Luftzuführung (13e) in der Milchleitung (13a) und zum vermischen der Luft (L) mit der Milch (M) ausgebildeten Mischabschnitt (13f), der bevorzugt als Engstelle (13g) in der Milchleitung (13a) samt dieser Engstelle (13g) stromabwärts nachfolgender, bevorzugt als langgestreckter Schlauch- oder Rohrabschnitt ausgeformter Entspannungsstrecke (13h) ausgebildet ist.

16. Vorrichtung nach einem der vorhergehenden Ansprüche,
***gekennzeichnet durch***
einen zum Hinzusetzen mindestens einer Aromakomponente zu dem kalt extrahierten Kaffee oder kalt extrahierten Espresso ausgebildeten Zusetzabschnitt (14),
wobei bevorzugt der Zusetzabschnitt (14) einen oder mehrere Vorratsbehälter (14a) für die Aromakomponente (n) und (einen) aus diesem/n vorratsbehälter(n) (14a) führende(n), die Aromakomponente (n) dem Wasser stromaufwärts oder stromabwärts der Durchströmeinheit (2) zusetzende(n) Leitungsabschnitt (e) (14b) umfasst und entweder (eine) bevorzugt in oder an diesem/n Leitungsabschnitt(en) (14b) angeordnete Fördervorrichtung(en) (14c), insbesondere (eine) Dosierpumpe(n), umfasst oder **durch** geeignete Anordnung des/der Vorratsbehälter(s) und der/des Leitungsabschnitte(s) so ausgebildet ist, dass die Aromakomponente(n) dem Wasser **durch** Einfluss der Schwerkraft zusetzbar ist/sind.

17. Vorrichtung nach einem der vorhergehenden Ansprüche,
***dadurch gekennzeichnet, dass***
die Durchströmeinheit (2) zur Aufnahme des Kaffeemehls (S) und zum Verpressen desselben mit einem vorbestimmten Pressdruck ausgebildet ist,
wobei die Durchströmeinheit (2) bevorzugt eine verschließbare Brühkammer (2a), insbesondere einen Brühzylinder, und ein innerhalb (I) der Brühkammer (2a) verschiebliches Presselement (2b), insbesondere einen Brühkolben, aufweist.

18. Vorrichtung nach einem der vorhergehenden Ansprüche mit Ausnahme des unmittelbar vorhergehenden Anspruchs,
***dadurch* gekennzeichnet, *dass***
die Durchströmeinheit zur Aufnahme eines auswechselbaren Einsatzes beinhaltend das Kaffeemehl (S) in vorportionierter Form, insbesondere eines/einer mit dem Kaffeemehl befüllten Kaffeepads oder Kaffeekapsel, ausgebildet ist.

19. Verfahren zum Zubereiten von kalt extrahiertem Kaffee oder von kalt extrahiertem Espresso aus mit Wasser zu durchströmendem Kaffeemehl (S), mit einer Vorrichtung nach einem der vorhergehenden Ansprüche,
wobei die Vorrichtung an ein externes Wasserleitungssystem (W) angeschlossen wird und/oder mit einem internen oder externen, befüllbaren Wasserreservoir (1a) versehen wird,
wobei das Kaffeemehl (S), bevorzugt in Schüttgutform, in einer Durchströmeinheit (2) angeordnet und mit Wasser aus dem Wasserleitungssystem oder dem Wasserreservoir durchströmt wird, wobei dieses Durchströmen bevorzugt mit einem definierten Wasserdruck oder Wasserdruckverlauf in der Durchströmeinheit (2) erfolgt, und
wobei die Durchströmeinheit (2) zum Zuleiten des Wassers mit dem externen wasserleitungssystem und/oder dem befüllbaren Wasserreservoir ohne Zwischenschalten eines Wassererhitzers und/oder über einen abschaltbaren oder abgeschalteten Wassererhitzer mit dem Wasserzulauf verbunden wird und wobei nicht erhitztes Wasser durch die Durchströmeinheit (2) geleitet wird.

## Claims

1. Device for preparing cold-extracted coffee or cold-extracted espresso from coffee powder (S) to be flowed through with water,
having a water inflow (1) which is configured for connecting the device to an external water supply system (W) and/or comprises an internal or external fillable water reservoir (1a), and having a throughflow unit (2) which is configured for receiving the coffee powder (S), preferably in bulk material form, and for throughflow of the same with water from the water inflow (1), the throughflow unit (2) being connectable or connected, for supply of the water without intermediate connection of a water heater and/or via a water heater which can be switched off or is switched off, to the water inflow (1) such that unheated water can be conducted through the throughflow unit (2), and also
having a water heater (6) with which water from the water inflow (1) can be heated and subsequently supplied to the throughflow unit (2) for throughflow of the coffee powder (S) with the heated water,
the device being configured for throughflow of the throughflow unit (2), for a predetermined hot brewing time t_{B} or with a first predetermined water quantity, with heated water from the water heater (6) and, preferably after the hot brewing time t_{B} or after passage of the predetermined water quantity, for a predetermined cold brewing time t_{K} or with a second predetermined water quantity and circumventing or switching off the water heater (6), with unheated water from the water inflow (1),
***characterised* by**
two parallel-connected water paths (7a, 7b) between water inflow (1) and throughflow unit (2), a first water path (7a) which connects the water inflow (1), without intermediate connection of a water heater and/or without actively- and/or passively-controlled alteration of the temperature of the water, to the throughflow unit (2), and a second water path (7b) which connects the water inflow (1) via the water heater (6) to the throughflow unit (2).

2. Device according to the preceding claim,
***characterised* in *that****,*
preferably by means of a control unit (8) which is either manually switchable or microprocessor-controlled and/or preferably by means of a plurality of shut-off unit(s) (5a, 5b, 5c, 5d) which are configured in particular as valve(s), the hot brewing time t_{B}, the cold brewing time t_{K}, the quantities of water which flow through the throughflow unit (2) respectively during these times and/or the first and/or second water quantity can be adjusted, preferably the ratio of the quantity of heated water, which flows during t_{B}, and of the quantity of unheated water, which flows during t_{K}, being able to be adjusted to a value between 1 : 200 and 1 : 1, particularly preferred between 1 : 100 and 1 : 2.

3. Device according to one of the preceding claims,
***characterised* in that**,
preferably by means of the control unit (8), a predetermined pause time t_{P} can be adjusted between a throughflow t_{B} of the throughflow unit (2) with heated water and a subsequent throughflow t_{K} with unheated water, t_{P} being preferably between 0.1 and 600 seconds, preferably between 0.5 and 300 seconds.

4. Device according to one of the preceding claims,
***characterised* by**
a pressure-producing element (3) for producing a defined water pressure or water pressure course in the throughflow unit (2) during throughflow of the coffee powder (S) with water,
the defined water pressure being preferably in the range between 0.1 and 50 bar, particularly preferred between 0.5 and 15 bar.

5. Device according to one of the preceding claims,
***characterised in* that**
the water heater is a thermally- or electrically-operated throughflow heater.

6. Device according to one of the preceding claims with reference back to claim 4,
***characterised* in that**
the element (3) comprises a pressure-producing conveying unit (4), in particular a water pump, and/or a first shut-off unit (5a), in particular a valve,
the element (3) being preferably a shut-off unit (5a) which is disposed in the flow path of the water between the water inflow (1), which is configured for connecting the device to an external water supply system (W) at pressure, and the throughflow unit (2), which shut-off unit is configured such that a throughflow of the throughflow unit (2) with water can be effected only at a predetermined minimum water pressure,
or
the element (3) being preferably a pressure-producing conveying unit (4), in particular a conveying pump, which is disposed in the flow path of the water between the external water supply system (W) and/or the water reservoir (1a) and the throughflow unit (2), which conveying unit (4) is configured such that a throughflow of the throughflow unit (2) with water is effected at a defined minimum water pressure.

7. Device according to one of the preceding claims,
***characterised* in *that***
the device, for example by means of a drink selection button disposed on a housing of the device, optionally also allows preparation of warm or hot coffee or espresso by water from the water inflow (1) being able to be supplied to the throughflow unit (2) exclusively or partially via the water heater (6).

8. Device according to the preceding claim,
***characterised* in that**
a preferably microprocessor-controlled control unit (8), with which one or more throughflow parameter(s) which is/are to be adjusted for preparation of the coffee or espresso in and/or with the device can be adjusted differently, depending on whether a cold drink, a warm drink or a hot drink is intended to be prepared.

9. Device according to the preceding claim,
***characterised* in that**
as throughflow parameter(s), the degree of grinding and/or the quantity of powder of a coffee powder (S) which is present before supply into the throughflow unit (2) in unground form as coffee beans, the time duration of the throughflow of the throughflow unit (2) with water and/or the pressure of the water during throughflow of the throughflow unit (2) being able to be selected and/or adjusted differently for a cold drink or a hot drink,
the device preferably having:
at least one, preferably two, different grinder(s) (9) which can be controlled via the control unit (8) and with which the degree of grinding and/or the quantity of powder can be influenced, and
a transport portion (10), in particular a downpipe or chute, with which the ground coffee powder can be transported from the grinder (9), from a metering device, from a metering container or from an insertion shaft into the throughflow unit (2).

10. Device according to one of the preceding claims,
***characterised by***
a steam producer (11), in particular a throughflow heater, heat exchanger or a boiler, with which water, preferably water coming from the water inflow (1), can be heated, converted into steam and subsequently supplied to the throughflow unit (2) for throughflow of the coffee powder (S) with steam, and
in that the device is configured for throughflow of the throughflow unit (2) for a predetermined hot steam time t_{D} with steam from the steam producer (11) and/or with a predetermined steam quantity from the steam producer (11) and, preferably after the hot steam time t_{D} and/or the throughflow with the predetermined steam quantity, while circumventing or after switching off the/a water heater (6) and/or the steam producer (11), for throughflow of the throughflow unit (2) for a predetermined cold brewing time t_{K} with unheated water from the water inflow (1) and/or with a predetermined quantity of unheated water from the water inflow (1).

11. Device according to the preceding claim,
***characterised* by**
two parallel-connected water paths (7a, 7c) between water inflow (1) and throughflow unit (2), a first water path (7a), which connects the water inflow (1), without intermediate connection of a water heater and/or without actively- and/or passively-controlled alteration of the temperature of the water, to the throughflow unit (2), and a third water path (7c) which connects the water inflow (1) via the steam producer (11) to the throughflow unit (2),
and/or
at least one, preferably a plurality of, shut-off unit(s) (5a, 5c), configured in particular as valve(s), and a control unit (8) which controls this/these shut-off unit(s), preferably a manually switchable or a microprocessor-controlled control unit, for adjusting the hot steam time t_{D} and the cold brewing time t_{K} and/or the quantities of steam or water flowing through the throughflow unit (2) respectively during these times,
and/or
in that, preferably by means of the control unit (8), a predetermined pause time t_{P} between a throughflow t_{D} of the throughflow unit (2) with steam and a subsequent throughflow t_{K} with unheated water can be adjusted, t_{P} being preferably between 0.1 and 600 seconds, preferably between 0.5 and 300 seconds.

12. Device according to one of the two preceding claims,
**characterised in that**,
for the purpose of initiating the coffee powder (S) with steam, the device is not configured for throughflow of the throughflow unit (2) with steam but, instead, is configured for introducing steam from the steam producer (11) into the throughflow unit (2) for a predetermined hot steam time t_{D} and/or according to a predetermined steam quantity such that the introduced steam cannot leave the throughflow unit (2) again during introduction and for a further predetermined time of for example between 2 and 10 seconds, as a result of which a high pressure can be built up in the throughflow unit (2).

13. Device according to one of the preceding claims,
**characterised in that**
the device has neither an active cooling unit for cooling water and/or the prepared coffee or espresso, such as for example an active cooling assembly, a compressor or a Peltier element, nor a passive cooling unit for cooling water and/or the prepared coffee or espresso, such as for example a heat exchanger or an absorber.

14. Device configured for preparing cold coffee or cold espresso according to one of the preceding claims, in particular an electrically-operated fully automatic coffee machine,
***characterised* by**
an outlet portion (12) with which the cold coffee or espresso leaving the throughflow unit (2) can be supplied to an external vessel (T), and
a milk froth-producing unit (13) with which cold milk froth can be produced and added with the outlet portion (12) to the cold coffee or espresso or, separately from the outlet portion (12), to the external vessel (T).

15. Device according to the preceding claim,
***characterised* in that**
the milk froth-producing unit (13) has:
• a milk line (13a) for supplying and transporting milk (M), comprising a milk-conveying device (13b), in particular a milk pump,
• an air supply unit (13e) for supplying air (L) which opens into the milk line (13a) and has an air-conveying device (13d), in particular an air pump, and
• a mixing portion (13f) which is arranged downstream of the opening (13c) of the air supply unit (13e) in the milk line (13a) and configured for mixing the air (L) with the milk (M), which mixing portion (13f) is preferably configured as narrow point (13g) in the milk line (13a) together with an expansion stretch (13h) which follows this narrow point (13g) downstream and is formed preferably as oblong hose- or pipe portion.

16. Device according to one of the preceding claims,
**characterised by**
an adding portion (14) which is configured for adding at least one aroma component to the cold-extracted coffee or cold-extracted espresso,
preferably the adding portion (14) comprising one or more storage containers (14a) for the aroma component(s) and (a) line portion(s) (14b) which lead(s) from this/these storage container(s) (14a) and add(s) the aroma component(s) to the water upstream or downstream of the throughflow unit (2), and either comprising (a) conveying device(s) (14c) which is/are disposed preferably in or on this/these line portion(s) (14b), in particular (a) metering pump(s), or being configured by suitable arrangement of the storage container(s) and of the line portion(s) such that the aroma component(s) is/are able to be added to the water by the effect of gravity.

17. Device according to one of the preceding claims,
***characterised* in that**
the throughflow unit (2) is configured for receiving the coffee powder (S) and compressing the same at a predetermined compression pressure,
the throughflow unit (2) having preferably a closable brewing chamber (2a), in particular a brewing cylinder, and a compression element (2b) which is moveable inside (I) the brewing chamber (2a), in particular a brewing piston.

18. Device according to one of the preceding claims with the exception of the immediately preceding claim,
***characterised* in that**
the throughflow unit is configured for receiving an exchangeable insert containing the coffee powder (S) in pre-portioned form, in particular a coffee pad or coffee capsule filled with the coffee powder.

19. Method for preparing, with a device according to one of the preceding claims, cold-extracted coffee or cold-extracted espresso from coffee powder (S) to be flowed through with water,
the device being connected to an external water supply system (W) and/or being provided with an internal or external fillable water reservoir (1a),
the coffee powder (S), preferably in bulk material form, being disposed in a throughflow unit (2) and being flowed through with water from the water supply system or from the water reservoir, this throughflow being effected preferably at a defined water pressure or water pressure course in the throughflow unit (2), and
the throughflow unit (2), for supplying the water with the external water supply system and/or the fillable water reservoir without intermediate connection of a water heater and/or via a water heater which can be switched off or is switched off, being connected to the water inflow and unheated water being conducted through the throughflow unit (2).

## Revendications

1. Dispositif destiné à la préparation de café extrait à froid ou d'expresso extrait à froid à partir de poudre de café (S) à travers laquelle doit passer de l'eau,
comportant un système d'amenée d'eau (1), conçu pour raccorder le dispositif à un système de conduite d'eau (W) externe et/ou muni d'un réservoir d'eau (1a) interne ou externe pouvant être rempli, et comportant une unité de traversée (2), conçue pour recevoir la poudre de café (S), de préférence en vrac, et pour laisser passer à travers celle-ci l'eau provenant du système d'amenée d'eau (1), ladite unité de traversée (2), pour amener l'eau sans le montage intermédiaire d'un dispositif de chauffage d'eau et/ou via un dispositif de chauffage d'eau déconnectable ou déconnecté, pouvant être reliée ou étant reliée au système d'amenée d'eau (1), de telle sorte que de l'eau non chauffée peut être conduite à travers l'unité de traversée (2), et
comportant un dispositif de chauffage d'eau (6), par lequel l'eau provenant du système d'amenée d'eau (1) peut être chauffée et être amenée ensuite vers l'unité de traversée (2) pour passer à travers la poudre de café (S),
ledit dispositif étant conçu pour laisser passer à travers l'unité de traversée (2), pour un temps d'infusion à chaud t_{B} prédéterminé ou avec une première quantité d'eau prédéterminée, de l'eau chauffée sortant du dispositif de chauffage d'eau (6) et, de préférence après le temps d'infusion à chaud t_{B} ou après le passage de la quantité d'eau prédéterminée, pour un temps d'infusion à froid t_{K} prédéterminé ou avec une deuxième quantité d'eau prédéterminée et moyennant le contournement ou la déconnexion du dispositif de chauffage d'eau (6), de l'eau non chauffée provenant du système d'amenée d'eau (1),
**caractérisé par**
deux voies d'eau (7a, 7b) montées en parallèle entre le système d'amenée d'eau (1) et l'unité de traversée (2), à savoir une première voie d'eau (7a) qui relie le système d'amenée d'eau (1) à l'unité de traversée (2) sans montage intermédiaire d'un dispositif de chauffage d'eau et/ou sans modification commandée de manière active et/ou passive de la température de l'eau, et une deuxième voie d'eau (7b) qui relie le système d'amenée d'eau (1) à l'unité de traversée (2) en passant par le dispositif de chauffage d'eau (6).

2. Dispositif selon la revendication précédente,
**caractérisé en ce que**
de préférence, au moyen d'une unité de commande (8) pouvant être commandée manuellement ou par microprocesseur, et/ou de préférence au moyen d'une ou plusieurs unité(s) d'arrêt (5a, 5b, 5c, 5d), réalisée(s) en particulier sous forme de valve(s), il est possible de régler le temps d'infusion à chaud t_{B}, le temps d'infusion à froid t_{K}, les quantités d'eau et/ou la première et/ou la deuxième quantité d'eau qui, dans chaque cas, traversent pendant ces intervalles de temps l'unité de traversée (2), le rapport entre la quantité d'eau chauffée s'écoulant pendant le temps t_{B} et la quantité d'eau non chauffée s'écoulant pendant le temps t_{K} pouvant être réglé à une valeur entre 1:200 et 1:1, encore mieux entre 1:100 et 1:2.

3. Dispositif selon l'une quelconque des revendications précédentes,
**caractérisé en ce que**
de préférence, il est possible au moyen de l'unité de commande (8) de régler un temps de pause t_{P} prédéterminé entre un passage t_{B} d'eau chauffée à travers l'unité de traversée (2) et un passage t_{K} consécutif d'eau non chauffée, la valeur t_{P} se situant de préférence entre 0,1 et 600 secondes, de préférence entre 0,5 et 300 secondes.

4. Dispositif selon l'une quelconque des revendications précédentes,
**caractérisé par**
un élément (3) générant une pression pour réaliser une pression d'eau ou une évolution de pression d'eau définies dans l'unité de traversée (2) pendant le passage de l'eau à travers la poudre de café (S),
la pression d'eau définie se situant de préférence dans une plage entre 0,1 et 50 bar, encore mieux entre 0,5 et 15 bar.

5. Dispositif selon l'une quelconque des revendications précédentes,
**caractérisé en ce que**
le dispositif de chauffage d'eau est un dispositif de chauffage à écoulement libre, à fonctionnement thermique ou électrique.

6. Dispositif selon l'une quelconque des revendications précédentes avec référence à la revendication 4,
**caractérisé en ce que**
l'élément (3) comporte une unité d'alimentation (4) générant une pression, en particulier une pompe à eau et/ou une première unité d'arrêt (5a), en particulier une valve,
ledit élément (3) étant, de préférence, une unité d'arrêt (5a), qui est disposée dans la voie de circulation de l'eau entre le système d'amenée d'eau (1), conçu pour raccorder le dispositif à un système de conduite d'eau (W) externe sous pression, et l'unité de traversée (2) et qui est configurée de telle sorte que l'eau ne peut circuler à travers l'unité de traversée (2) qu'avec une pression d'eau minimale prédéterminée,
ou
ledit élément (3) étant, de préférence, une unité d'alimentation (4) générant une pression, en particulier une pompe à eau, qui est disposée dans la voie de circulation de l'eau entre le système de conduite d'eau (W) externe et/ou le réservoir d'eau (1a) et l'unité de traversée (2) et qui est configurée de telle sorte que l'eau ne peut circuler à travers l'unité de traversée (2) qu'avec une pression d'eau minimale définie.

7. Dispositif selon l'une quelconque des revendications précédentes,
**caractérisé en ce que**
le dispositif permet au choix, par exemple au moyen d'une touche de sélection de la boisson, disposée sur un boîtier du dispositif, la préparation de café ou d'expresso froid ou chaud, du fait que l'eau provenant du système d'amenée d'eau (1) peut être amenée vers l'unité de traversée (2) exclusivement ou partiellement via le dispositif de chauffage d'eau (6).

8. Dispositif selon la revendication précédente,
**caractérisé en ce que**
une unité de commande (8), commandée de préférence par un microprocesseur, permet de régler différemment un ou plusieurs paramètre(s) d'écoulement, qui est/sont à régler pour la préparation du café ou de l'expresso dans et/ou avec le dispositif et qui dépend/dépendent du type de boisson à préparer, à savoir une boisson froide, une boisson chaude ou une boisson très chaude.

9. Dispositif selon la revendication précédente,
**caractérisé en ce que**
en tant que paramètres d'écoulement, le degré de mouture et/ou la quantité d'une poudre de café (S), présente sous forme de grains de café à l'état non moulu avant l'admission dans l'unité de traversée (2), la/les durée(s) du passage de l'eau à travers l'unité de traversée (2) et/ou la pression de l'eau pendant qu'elle traverse l'unité de traversée (2) est/sont sélectionnables et/ou réglables différemment pour une boisson froide ou une boisson très chaude,
le dispositif comportant de préférence :
au moins un, de préférence deux broyeurs (9) différents, qui peut/peuvent être commandé(s) par l'unité de commande (8) et lequel/lesquels permettent d'influer sur le degré de mouture et/ou la quantité de poudre de café, et
un tronçon de transport (10), en particulier un tube descendant ou un plan incliné qui permettent de transporter la poudre de café moulu à partir du broyeur (9) à partir d'un dispositif de dosage, à partir d'un réservoir de dosage ou à partir d'une goulotte d'introduction vers l'unité de traversée (2).

10. Dispositif selon l'une quelconque des revendications précédentes,
**caractérisé**
**par** un générateur de vapeur (11), en particulier un dispositif de chauffage à écoulement libre, un échangeur thermique ou un chauffe-eau, qui permet de chauffer l'eau, de préférence l'eau provenant du système d'amenée d'eau (1), de la transformer en vapeur d'eau et de l'acheminer ensuite vers l'unité de traversée (2) pour passer sous forme de vapeur d'eau à travers la poudre de café (S), et
en ce que le dispositif est configuré pour faire passer à travers l'unité de traversée (2), pour un temps de vapeur chaude t_{D} prédéterminé, de la vapeur sortant du générateur de vapeur (11) et/ou une quantité de vapeur prédéterminée sortant du générateur de vapeur (11) et, de préférence après le temps de vapeur chaude t_{D} et/ou le passage d'une quantité de vapeur prédéterminée, moyennant le contournement ou après la déconnexion du/d'un dispositif de chauffage d'eau (6) et/ou du générateur de vapeur (11), pour faire passer à travers l'unité de traversée (2), pour un temps d'infusion à froid t_{K} prédéterminé, de l'eau non chauffée provenant du système d'amenée d'eau (1) et/ou une quantité prédéterminée d'eau non chauffée provenant du système d'amenée d'eau (1).

11. Dispositif selon la revendication précédente,
**caractérisé**
**par** deux voies d'eau (7a, 7c) montées en parallèle entre le système d'amenée d'eau (1) et l'unité de traversée (2), à savoir une première voie d'eau (7a) qui relie le système d'amenée d'eau (1) à l'unité de traversée (2) sans montage intermédiaire d'un dispositif de chauffage d'eau et/ou sans modification commandée de manière active et/ou passive de la température de l'eau, et une troisième voie d'eau (7c) qui relie le système d'amenée d'eau (1) à l'unité de traversée (2) en passant par le générateur de vapeur (11),
et/ou
par au moins une, de préférence plusieurs unité(s) d'arrêt (5a, 5c), réalisée(s) en particulier sous forme de valve(s), et une unité de commande (8) qui commande cette/ces unité(s) d'arrêt, de préférence une unité de commande pouvant être commandée manuellement ou commandée par microprocesseur, afin de régler le temps de vapeur chaude t_{D} et le temps d'infusion à froid t_{K} et/ou les quantités de vapeur ou d'eau circulant, dans chaque cas, pendant ces intervalles de temps à travers l'unité de traversée (2),
et/ou
en ce que, de préférence, au moyen de l'unité de commande (8) peut être réglé un temps de pause t_{P} prédéterminé entre un passage t_{D} de vapeur à travers l'unité de traversée (2) et un passage t_{K} consécutif d'eau non chauffée, la valeur t_{P} se situant de préférence entre 0,1 et 600 secondes, de préférence entre 0,5 et 300 secondes.

12. Dispositif selon l'une quelconque des deux revendications précédentes,
**caractérisé en ce que**
pour initier la poudre de café (S) avec la vapeur, le dispositif n'est pas configuré pour faire passer la vapeur à travers l'unité de traversée (2), mais, au lieu de cela, il est configuré pour introduire la vapeur sortant du générateur de vapeur (11) dans l'unité de traversée (2) pour un temps de vapeur chaude t_{D} prédéterminé et/ou selon une quantité de vapeur prédéterminée, de telle sorte que la vapeur introduite ne peut pas sortir de l'unité de traversée (2) pendant le processus d'introduction et pendant une autre durée prédéterminée située, par exemple, entre 2 et 10 secondes, moyennant quoi il peut se former une surpression dans l'unité de traversée (2)

13. Dispositif selon l'une quelconque des revendications précédentes,
**caractérisé en ce que**
le dispositif ne comporte ni unité de refroidissement active destinée à refroidir l'eau et/ou le café ou l'expresso préparés, tel qu'un groupe refroidisseur actif, un compresseur ou un élément Peltier, ni une unité de refroidissement passive destinée à refroidir l'eau et/ou le café ou l'expresso préparés, tel qu'un échangeur thermique ou un absorbeur.

14. Dispositif destiné à la préparation de café froid ou d'expresso froid selon l'une quelconque des revendications précédentes, en particulier une machine à café électrique entièrement automatique,
**caractérisé par**
un tronçon de sortie (12), par lequel le café ou l'expresso froid, sortant de l'unité de traversée (2), peut être acheminé vers un réservoir externe (T), et
une unité de production de mousse de lait (13), par laquelle la mousse de lait froide peut être produite et peut être ajoutée au café ou à l'expresso froid via le tronçon de sortie (12), ou, séparée du tronçon de sortie, (12) au réservoir externe (T).

15. Dispositif selon la revendication précédente,
**caractérisé en ce que**
l'unité de production de mousse de lait (13) comporte :
- une conduite de lait (13a) destinée à acheminer et transporter le lait (M), contenant un dispositif de transport du lait (13b), en particulier une pompe à lait,
- une amenée d'air (13e), qui débouche dans la conduite de lait (13a), comporte un dispositif d'acheminement d'air (13d), en particulier une pompe à air, et qui est destiné à acheminer l'air (L), et
- un tronçon de lait (13f), qui est disposé en aval de l'embouchure (13c) de l'amenée d'air (13e) dans la conduite de lait (13a) et est conçu pour mélanger l'air (L) avec le lait (M) et qui est configuré de préférence sous forme de zone d'étranglement (13g) dans la conduite de lait (13a), y compris, sous forme de tronçon de détente (13h), consécutif en aval de ladite zone d'étranglement (13g) et constitué, de préférence, par un tronçon de tuyau flexible ou de tube allongé.

16. Dispositif selon l'une quelconque des revendications précédentes,
**caractérisé par**
un tronçon d'addition (14) réalisé pour ajouter au moins un composant aromatique au café extrait à froid ou à l'expresso extrait à froid,
ledit tronçon d'addition (14) comportant de préférence un ou plusieurs réservoirs (14a) pour le/les composant(s) aromatique(s) et un/des tronçon(s) de conduite (14b) menant hors de ce/ces réservoir(s) (14a) et ajoutant le/les composant(s) aromatique(s) à l'eau en amont ou en aval de l'unité de traversée (2), et comportant un/des dispositif(s) de transport (14c), en particulier une/des pompe(s) de dosage, qui est/sont disposé(s) de préférence dans ou sur ledit/lesdits tronçon(s) de conduite (14b), ou étant configuré par un agencement approprié du/des réservoir(s) et du/des tronçon(s) de conduite, de telle sorte que le/les composant(s) aromatique(s) peut/peuvent être ajouté(s) à l'eau sous l'effet de la force de gravité.

17. Dispositif selon l'une quelconque des revendications précédentes,
**caractérisé en ce que**
l'unité de traversée (2) est réalisée pour recevoir la poudre de café (S) et pour comprimer celle-ci avec une force de pression prédéterminée,
ladite unité de traversée (2) comportant de préférence une chambre d'infusion (2a) pouvant être fermée, en particulier un cylindre d'infusion, et un élément de pression (2b), en particulier un piston d'infusion, mobile à l'intérieur (I) de la chambre d'infusion (2a).

18. Dispositif selon l'une quelconque des revendications précédentes, à l'exception de la revendication immédiatement précédente,
**caractérisé en ce que**
l'unité de traversée est configurée pour recevoir un insert amovible contenant la poudre de café (S) sous forme pré-portionnée, en particulier une dosette de café ou une capsule de café remplie de poudre de café.

19. Procédé permettant la préparation de café extrait à froid ou d'expresso extrait à froid à partir de poudre de café (S) à travers laquelle doit passer l'eau, au moyen d'un dispositif selon l'une quelconque des revendications précédentes,
le dispositif étant raccordé à un système de conduite d'eau (W) externe et/ou est muni d'un réservoir d'eau (1a) interne ou externe pouvant être rempli,
la poudre de café (S), de préférence en vrac, étant déposée dans une unité de traversée (2) et est traversée par l'eau sortant du système de conduite d'eau ou du réservoir d'eau, cet écoulement d'eau étant effectué avec une pression d'eau ou une évolution de la pression d'eau définies dans l'unité de traversée (2), et
l'unité de traversée (2), pour amener l'eau avec le système de conduite d'eau externe et/ou le réservoir d'eau remplissable sans le montage intermédiaire d'un dispositif de chauffage d'eau et/ou via un dispositif de chauffage d'eau déconnectable ou déconnecté, étant reliée au système d'amenée d'eau, et l'eau non chauffée étant guidée à travers l'unité de traversée (2).
